# EUROPEAN PATENT SPECIFICATION

(11) **EP 4 301 804 B1**
(45) Date of publication and mention of the grant of the patent: **04.12.2024**
(21) Application number: 22705555.5
(22) Date of filing: 01.03.2022
(51) Int. Cl.: C08G 73/12, C08L 79/08

(54) **DIELECTRIC MATERIALS BASED ON AMIDE-IMIDE-EXTENDED BISMALEIMIDES**
DIELEKTRISCHE MATERIALIEN AUF BASIS VON AMIDIMID-VERLÄNGERTEN BISMALEIMIDEN
MATÉRIAUX DIÉLECTRIQUES À BASE DE BISMALÉIMIDES À EXTENSION AMIDE-IMIDE

(30) Priority: 04.03.2021 EP 21160642
(43) Date of publication of application: 10.01.2024
(73) Proprietor: Merck Patent GmbH, 64293 Darmstadt (DE)
(72) Inventor: LARBIG, Gregor, 64293 Darmstadt (DE); MEYER, Frank Egon, 64293 Darmstadt (DE); MISKIEWICZ, Pawel, 64293 Darmstadt (DE)
(74) Representative: Merck Patent Association
(86) International application number: PCT/EP2022/055034
(87) International publication number: WO 2022/184661

(56) References cited:
- US-A1- 2017 152 418
- US-A1- 2018 237 668

## Description

### Field of the invention

The present invention relates to a new class of dielectric polymer material, which is particularly suitable for the manufacturing of electronic devices. The dielectric polymer material is formed by reacting a new type of bismaleimide compound and shows an advantageous well-balanced profile of favorable material properties, particularly with regard to the requirements in advanced electronic packaging applications such as e.g. wafer level packaging (WLP) as well as for low-dielectric adhesive applications. The dielectric polymer material of the present invention shows an advantageous well-balanced profile of material properties including: (a) favorable thermomechanical properties such as e.g. high glass transition temperature (Tg), low coefficient of thermal expansion (CTE), high elongation at break and high tensile strength; (b) favorable dielectric properties such as e.g. low dielectric constant and low dielectric loss tangent; and (c) good adhesive properties, in particular high adhesive strength on copper and SiO₂ passivated wafers.

The dielectric polymer material of the present invention is formed by reacting a bismaleimide compound. As bismaleimide compounds, certain amide-imide-extended bismaleimide compounds are described herein. Such compounds are photostructurable and can be used as starting material for various applications in electronic device manufacturing such as e.g. for the preparation of repassivation layers in packaged electronic devices (including passivation of conductive or semiconducting components in redistribution layer (RDLs) or die attaches), in thin film formulations and/or in adhesive formulations. In addition, said bismaleimide compounds have and excellent film forming capability and are easy to process from conventional solvents to form the dielectric polymer as a spin-on material.

The bismaleimide compounds of the present invention have an oligomeric structure with an amide-imide extended repeating unit in the middle part of the molecule and maleimide groups at each terminal end of the molecule.

There is further provided a method for forming said dielectric polymer material. Beyond that, the present invention relates to the dielectric polymer material and to an electronic device comprising said polymer material as dielectric material.

The bismaleimide compounds and related dielectric polymer material of the present invention allow a cost-effective and reliable manufacturing of microelectronic devices where the number of defective devices caused by mechanical deformation (warping) due to undesirable thermomechanical expansion is significantly reduced.

### Background of the invention

As solid-state transistors started to replace vacuum-tube technology, it became possible for electronic components, such as resistors, capacitors, and diodes, to be mounted directly by their leads into printed circuit boards of cards, thus establishing a fundamental building block or level of packaging that is still in use. Complex electronic functions often require more individual components than can be interconnected on a single printed circuit card. Multilayer card capability was accompanied by development of three-dimensional packaging of daughter cards onto multilayer mother boards. Integrated circuitry allows many of the discrete circuit elements such as resistors and diodes to be embedded into individual, relatively small components known as integrated circuit chips or dies. In spite of incredible circuit integration, however, more than one packaging level is typically required, in part because of the technology of integrated circuits itself. Integrated circuit chips are quite fragile, with extremely small terminals. First-level packaging achieves the major functions of mechanically protecting, cooling, and providing capability for electrical connections to the delicate integrated circuit. At least one additional packaging level, such as a printed circuit card, is utilized, as some components (high-power resistors, mechanical switches, capacitors) are not readily integrated onto a chip. For very complex applications, such as mainframe computers, a hierarchy of multiple packaging levels is required.

A wide variety of advanced packaging technologies exist to meet the requirements of today's semiconductor industry. The leading advanced packaging technologies - wafer-level packaging (WLP), fan-out wafer level packaging (FOWLP), 2.5D interposers, chip-on-chip stacking, package-on-package stacking, embedded IC - all require structuring of thin substrates, redistribution layers and other components like high resolution interconnects. The end consumer market presents constant push for lower prices and higher functionality on ever smaller and thinner devices. This drives the need for the next generation packaging with finer features and improved reliability at a competitive manufacturing cost.

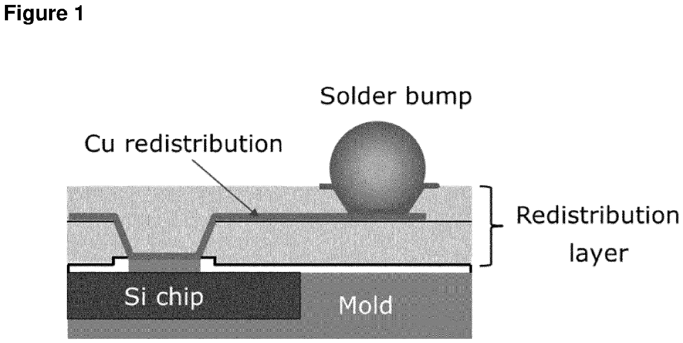

Wafer-level packaging (WLP) is one of the most promising semiconductor package technologies for the next generation of compact, high performance electronic devices. In general, WLP is the process of packaging an integrated circuit while it is still part of the wafer. This is in contrast to the more conventional method of cutting the wafer into individual circuits and then packaging them. WLP is based on redistribution layers (RDLs), which enable the connection between the die and the solder balls, resulting in improved signal propagation and smaller form factor (see Figure 1). Major application areas of WLP are smartphones and wearables due to their size constraints.

With current materials, WLP processes are limited to medium chip size applications. The reasons for this limitation are the unsuitable thermomechanical properties and the non-optimized processing of these materials. Dielectric materials used for next-generation microchip RDLs should meet certain requirements. In addition to a low dielectric constant, several thermomechanical properties such as e.g. high glass transition temperature (Tg), low coefficient of thermal expansion (CTE), high elongation at break and high tensile strength play an important role.

An important material class, which meets some of the above-mentioned requirements, are imide-extended maleimide compounds described in various publications in the state of the art:
US 2004/0225026 A1 and US 2011/0130485 A1 relate to thermosetting (adhesive) compositions comprising imide-extended mono-, bis- or polymaleimide compounds. The imide-extended maleimide compounds are prepared by the condensation of appropriate anhydrides with appropriate diamines to give amine terminated compounds These compounds are then condensed with excess maleic acid anhydride to yield imide-extended maleimide compounds. When incorporated into a thermoset composition, the imide-extended maleimide compounds are said to reduce brittleness and increase toughness in the composition, while not sacrificing thermal stability.

US 2011/0049731 A1 and US 2013/0228901 A1 relate to materials and methods for stress reduction in semiconductor wafer passivation layers. Described are compositions containing low modulus photoimageable polyimides for use as passivating layers and devices comprising a semiconductor wafer and a passivating layer made therefrom.

US 2017/0152418 A1 relates to maleimide adhesive films which are prepared from thermosetting maleimide resins containing imide-extended mono-, bis- and polymaleimide compounds. The maleimide adhesive films are said to be photostructurable and suitable for the production of electronic equipment, integrated circuits, semiconductor devices, passive devices, solar batteries, solar modules, and/or light emitting diodes.

However, the imide-extended maleimide compounds described above have an unfavorable solubility in common solvents used in industry and an unfavorable profile of thermomechanical properties such as e.g. a low glass transition temperature, a high coefficient of thermal expansion (CTE) after Tg. When material modifications are aiming to reduce the CTE in this material class, the materials get very brittle and cannot be used in WLP applications.

Another trend in semiconductor industry concerns the demand for materials with low dielectric properties (low dielectric constant, low dielectric loss tangent) in the high frequency region. The frequency of signals increased with increasing speed of signal transmission in printed circuit boards. In addition, the 5G era requires reliable materials with unique properties to meet specific requirements. In general, the adhesive strength for low dielectric materials is usually poor, since the polarity of these insulating films is typically low. New materials that combine low loss dielectric behavior with good adhesive properties are of great interest for the development of various upcoming applications.

WO 2019/141833 A1 relates to dielectric polymers with excellent film forming capability, excellent mechanical properties, a low dielectric constant and a low coefficient of thermal expansion. The dielectric polymers are prepared from polymerizable compounds having mesogenic groups and they can be used as dielectric material for the preparation of passivation layers in electronic devices.

Although these materials have many beneficial properties, some characteristics, such as the glass transition temperature and processability, need to be increased or improved in order to realize the full potential of these materials.

Materials having a low coefficient of thermal expansion (CTE) are reported in S. D. Kim et al., Sci. Adv., 2018; 4: eaau1956, 1-10 describing new poly(amide-imide) materials for transparent and flexible displays with a CTE value of 4 ppm/K. The novel poly(amide-imide) materials are based on a 4,4'-biphenyldiamine monomer, where two trifluoromethyl groups are introduced at the 2 and 6 positions on one of the aromatic rings. The materials are said to be transparent and stable at high temperatures and to have a low CTE.

However, such materials exhibit poor adhesive strength and, in terms of material properties, they do not meet all requirements for dielectrics being suitable for modern packaging applications, especially for photoimageable dielectrics.

### Object of the invention

It is an object of the present invention to overcome the drawbacks and disadvantages in the prior art and to provide a new class of dielectric polymer material, which shows an advantageous well-balanced profile of favorable material properties, particularly with regard to requirements in advanced electronic packaging applications such as e.g. wafer level packaging (WLP) as well as for low-dielectric adhesive applications.

Hence, it is an object of the present invention to provide a dielectric polymer material, which shows an advantageous well-balanced profile of material properties including: (a) favorable thermomechanical properties such as e.g. high glass transition temperature (Tg), low coefficient of thermal expansion (CTE), high elongation at break and high tensile strength; (b) favorable dielectric properties such as e.g. low dielectric constant and low dielectric loss tangent; and (c) good adhesive properties, in particular high adhesive strength on copper and SiO₂ passivated wafers.

It is a further object of the present invention to provide a bismaleimide compound, from which said dielectric polymer material can be obtained. It is an object of the present invention that such bismaleimide compounds are photostructurable and can be used as starting material for various applications in electronic device manufacturing such as e.g. for the preparation of repassivation layers in packaged electronic devices (including passivation of conductive or semiconducting components in a redistribution layer (RDL) or die attach), in thin film formulations and/or in adhesive formulations. In addition, said bismaleimide compounds should have excellent film forming capability and be easy to process from conventional solvents.

Beyond that, it is an object of the present invention to provide a method for forming said dielectric polymer material using the bismaleimide compound. Finally, it is an object of the present invention to provide the dielectric polymer material and an electronic device comprising said polymer as dielectric material.

It is an object of the present invention that the bismaleimide compounds and related dielectric polymer material allow a cost efficient and reliable manufacturing of microelectronic devices, where the number of defective devices caused by mechanical deformation (warping) due to undesirable thermomechanical properties is significantly reduced.

### Summary of the invention

The present inventors surprisingly found that the above objects are achieved by a dielectric polymer material, which is formed from a new type of bismaleimide compounds. The dielectric polymer material shows an advantageous well-balanced profile of material properties including: (a) favorable thermomechanical properties such as e.g. high glass transition temperature (Tg), low coefficient of thermal expansion (CTE), high elongation at break and high tensile strength; (b) favorable dielectric properties such as e.g. low dielectric constant and low dielectric loss tangent; and (c) good adhesive properties, in particular high adhesive strength on copper and SiO₂ passivated wafers.

The bismaleimide compound of the present invention is represented by Formula (1) or Formula (2): 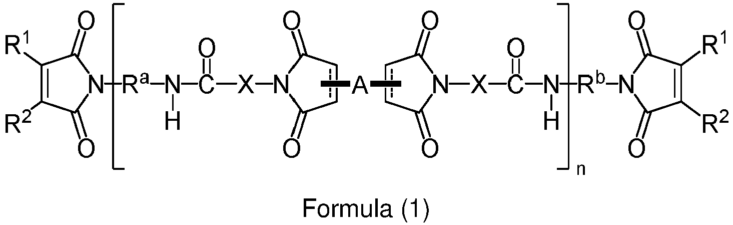 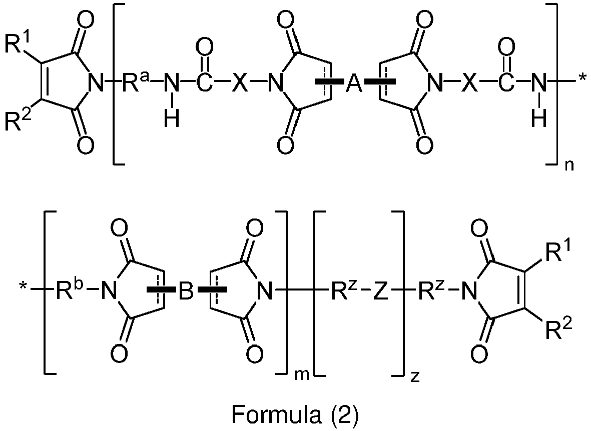 wherein:
A, B and Z are independently and at each occurrence independently from each other a binding unit comprising one or more of an aliphatic, aromatic, or siloxane moiety, wherein optionally one or more of A, B and Z contains a cardo center or spiro center;
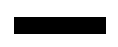 represents one single bond or two single bonds;
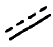 represents a single bond or double bond;
R^{a} and R^{b} are independently and at each occurrence independently from each other a binding unit comprising one or more of an aliphatic, aromatic, or siloxane moiety;
R^{z} is R^{a} or R^{b};
X is at each occurrence independently from each other a binding unit comprising one or more of an aliphatic, aromatic, or siloxane moiety;
R¹ is H or alkyl having 1 to 5 carbon atoms, preferably H or CH₃;
R² is H or alkyl having 1 to 5 carbon atoms, preferably H or CH₃;
n is an integer from 1 to 60, preferably 1 to 50, more preferably 2 to 30, and most preferably 3 to 20;
m is an integer from 0 to 60, preferably 0 to 50, more preferably 0 to 30, and most preferably 0 to 20; and
z is an integer from 0 to 60, preferably 0 to 50, more preferably 0 to 30, and most preferably 0 to 20;
wherein at least one of m or z is ≠ 0, preferably at least one of m or z is ≥ 1, more preferably at least one of m or z ≥ 2, most preferably at least one of m or z is ≥ 3.

Said bismaleimide compounds are used as monomer compounds to form a new class of dielectric polymer material. Said dielectric polymer material is prepared by the following method, which also forms part of the present invention:
Method for forming a dielectric polymer material comprising the following steps:
(i) providing a formulation comprising one or more bismaleimide compound according to the present invention; and
(ii) curing said formulation.

Moreover, a dielectric polymer material is provided, which is obtainable or obtained by the above-mentioned method for forming a dielectric polymer material.

Beyond that, a dielectric polymer material is provided, which comprises at least one repeating unit, which is derived from the bismaleimide compound according to the present invention.

Finally, an electronic device is provided comprising a dielectric polymer material according to the present invention.

Preferred embodiments of the present invention are described hereinafter and in the dependent claims.

### Brief description of the figures

**Fig. 1****:** Schematic view of a fan-out wafer-level packaging (WLP) structure.
**Fig. 2****:** DMA measurement of polymer material obtained from Oligomer **(7)** cured together with 5 wt.-% Irgacure OXE-02.
**Fig. 3****:** DMA measurement of polymer material obtained from Oligomer **(7)** cured together with 10 wt.-% bis(3-ethyl-5-methyl-4-maleimidophenyl)methane (CAS RN: 105391-33-1, TCI) as structural additive and 5 phr Irgacure OXE-02.
**Fig. 4****:** DMA measurement of polymer material obtained from Oligomer **(8)** cured together with 5 wt.-% Irgacure OXE-02.
**Fig. 5****:** DMA measurement of polymer material obtained from Oligomer **(8)** cured together with 25 wt.-% tetra(ethylene glycol) diacrylate (CAS RN: 17831-71-9, Merck Sigma-Aldrich) as structural additive and 5 phr Irgacure OXE-02.
**Fig. 6****:** DMA measurement of polymer material obtained from Oligomer **(10)** cured together with 5 wt.-% Irgacure OXE-02.
**Fig. 7****:** DMA measurement of polymer material obtained from Oligomer **(10)** cured together with 10 wt.-% bis(3-ethyl-5-methyl-4-maleimidophenyl)methane (CAS RN: 105391-33-1, TCI) as structural additive and 5 phr Irgacure OXE-02.
**Fig. 8****:** DMA measurement of polymer material obtained from reference material BMI3000 (commercial grade, Designer Molecules Inc.) BMI3000 cured together with 5 wt.-% Irgacure OXE-02.

### Detailed description

### Definitions

The term "binding unit" as used herein, relates to an organic structural unit that connects two or more parts of a molecule. A binding unit is typically composed of different moieties. A binding unit may be divalent or polyvalent, preferably divalent or tetravalent.

The term "spiro compound" as used herein, describes compounds having a spiro center consisting of two rings connected orthogonally through one common quaternary bonding atom. Typically, a carbon atom serves as the spiro center. The simplest spiro compounds are bicyclic or have a bicyclic portion as part of a larger ring system, in either case with the two rings connected through the common quaternary bonding atom defining the spiro center. The spiro center, together with adjacent groups attached thereto, forms a so-called "spiro moiety", which may be regarded as a characteristic structural unit of spiro compounds. The spiro moiety is typically linked to at least two adjacent further structural units of the chemical compound. Polymeric spiro compounds are also referred to as "spiro polymers".

The term "cardo polymer" as used herein, describes a subgroup of polymers, where carbons in the backbone of the polymer chain are also incorporated into ring structures. These backbone carbons are quaternary centers (cardo centers) and form part of a so-called "cardo moiety". As such, the cyclic side group lies perpendicular to the plane of polymer chain, creating a looping structure. The cardo structure is very similar to the spiro structure, but has only one ring attached to a cardo center, while two rings are attached to a spiro center. The cardo center, together with adjacent groups attached thereto, forms a so-called "cardo moiety", which may be regarded as a characteristic structural unit of cardo polymers. The cardo moiety is typically linked to at least two adjacent further structural units of the chemical compound.

The term "aliphatic moiety" as used herein, relates to a linear, branched, cyclic or bridged cyclic aliphatic unit which forms part of a structure of a chemical compound. The aliphatic moiety may contain one or more heteroatoms selected from N, O, S and P. The aliphatic moiety may be unsubstituted or substituted, preferably with one or more substituents selected from the list consisting of -C(O)R^{v}, -C(O)OR^{v}, -NR^{v}R^{w}, -OR^{v}, -R^{x}, -CN, -F and -Cl, wherein R^{v} = H, C6-C14 aryl or C1-C14 alkyl, R^{w} = H, C6-C14 aryl or C1-C14 alkyl and R^{x} = C6-C14 aryl or C1-C14 alkyl, preferably R^{v} = H, methyl, ethyl, propyl or phenyl, R^{w} = H, methyl, ethyl, propyl or phenyl and R^{x} = methyl, ethyl, propyl or phenyl. The aliphatic moiety may contain one or more functional groups, preferably selected from the list consisting of C=C double bond, C=C triple bond, amide, carbamate, carbonate, ester, ether, secondary or tertiary amine, and keto. The aliphatic moiety is typically linked to at least two adjacent further structural units of the chemical compound.

The term "aromatic moiety" as used herein, relates to a monocyclic or polycyclic aromatic unit which forms part of a structure of a chemical compound. Polycyclic aromatic units include two or more connected aromatic ring systems which are fixed in one plane. An aromatic moiety may be (i) a hydrocarbon aromatic moiety or (ii) a heteroatom containing aromatic moiety, also referred to as heteroaromatic moiety. Hydrocarbon aromatic moieties contain an aromatic ring structure made of carbon atoms, whereas heteroaromatic moieties contain an aromatic ring structure, which further comprises one or more heteroatoms selected from N, O, S and P. The aromatic moiety may be unsubstituted or substituted, preferably with one or more substituents selected from the list consisting of -C(O)R^{v}, -C(O)OR^{v}, -NR^{v}R^{w}, -OR^{v}, -R^{x}, -CN, -F and -Cl, wherein R^{v} = H, C6-C14 aryl or C1-C14 alkyl, R^{w} = H, C6-C14 aryl or C1-C14 alkyl and R^{x} = C6-C14 aryl or C1-C14 alkyl, preferably R^{v} = H, methyl, ethyl, propyl or phenyl, R^{w} = H, methyl, ethyl, propyl or phenyl and R^{x} = methyl, ethyl, propyl or phenyl. The aromatic moiety is typically linked to at least two adjacent further structural units of the chemical compound.

The term "siloxane moiety" as used herein, refers to a structural unit of a chemical compound which comprises at least one Si-O-Si linkage. The siloxane moiety may be linear, branched or cyclic. The siloxane moiety may be unsubstituted or substituted, preferably with one or more substituents selected from the list consisting of -C(O)R^{v}, -C(O)OR^{v}, -NR^{v}R^{w}, -OR^{v}, -R^{x}, -CN, -F and -Cl, wherein R^{v} = H, C6-C14 aryl or C1-C14 alkyl, R^{w} = H, C6-C14 aryl or C1-C14 alkyl and R^{x} = C6-C14 aryl or C1-C14 alkyl, preferably R^{v} = H, methyl, ethyl, propyl or phenyl, R^{w} = H, methyl, ethyl, propyl or phenyl and R^{x} = methyl, ethyl, propyl or phenyl. The siloxane moiety is typically linked to at least two adjacent further structural units of the chemical compound.

The term "polymer" includes, but is not limited to, homopolymers, copolymers, for example, block, random, and alternating copolymers, terpolymers, quaterpolymers, etc., and blends and modifications thereof. Furthermore, unless otherwise specifically limited, the term "polymer" shall include all possible configurational isomers of the material. These configurations include, but are not limited to isotactic, syndiotactic, and atactic symmetries. A polymer is a molecule of high relative molecular mass, the structure of which essentially comprises the multiple repetition of units (i.e. repeating units) derived, actually or conceptually, from molecules of low relative mass (i.e. monomers). Polymers are typically mixtures of molecules with different chain lengths and thus have a molar mass distribution.

The term "oligomer" is a molecular complex that consists of a few monomer units, in contrast to a polymer, where the number of monomers is, in principle, unlimited. Dimers, trimers and tetramers are, for instance, oligomers composed of two, three and four monomers, respectively. Oligomers are typically mixtures of molecules with different chain lengths and thus have a molar mass distribution.

The term "monomer" as used herein, refers to a molecule which can undergo polymerization thereby contributing constitutional units (repeating units) to the essential structure of a polymer or an oligomer.

The term "homopolymer" as used herein, stands for a polymer derived from one species of (real, implicit or hypothetical) monomer.

The term "copolymer" as used herein, generally means any polymer derived from more than one species of monomer, wherein the polymer contains more than one species of corresponding repeating unit. In one embodiment the copolymer is the reaction product of two or more species of monomer and thus comprises two or more species of corresponding repeating unit. It is preferred that the copolymer comprises two, three, four, five or six species of repeating unit. Copolymers that are obtained by copolymerization of three monomer species can also be referred to as terpolymers. Copolymers that are obtained by copolymerization of four monomer species can also be referred to as quaterpolymers. Copolymers may be present as block, random, and/or alternating copolymers.

The term "block copolymer" as used herein, stands for a copolymer, wherein adjacent blocks are constitutionally different, i.e. adjacent blocks comprise repeating units derived from different species of monomer or from the same species of monomer but with a different composition or sequence distribution of repeating units.

Further, the term "random copolymer" as used herein, refers to a polymer formed of macromolecules in which the probability of finding a given repeating unit at any given site in the chain is independent of the nature of the adjacent repeating units. Usually, in a random copolymer, the sequence distribution of repeating units follows Bernoullian statistics.

The term "alternating copolymer" as used herein, stands for a copolymer consisting of macromolecules comprising two species of repeating units in alternating sequence.

"Electronic packaging" is a major discipline within the field of electronic engineering, and includes a wide variety of technologies. It refers to inserting discrete components, integrated circuits, and MSI (medium-scale integration) and LSI (large-scale integration) chips (usually attached to a lead frame by beam leads) into plates through hole on multilayer circuit boards (also called cards), where they are soldered in place. Packaging of an electronic system must consider protection from mechanical damage, cooling, radio frequency noise emission, protection from electrostatic discharge maintenance, operator convenience, and cost.

The term "microelectronic device" as used herein refers to electronic devices of very small electronic designs and components. Usually, but not always, this means micrometer-scale or smaller. These devices typically contain one or more microelectronic components which are made from semiconductor materials and interconnected in a packaged structure to form the microelectronic device. Many electronic components of normal electronic design are available in a microelectronic equivalent. These include transistors, capacitors, inductors, resistors, diodes and naturally insulators and conductors can all be found in microelectronic devices. Unique wiring techniques such as wire bonding are also often used in microelectronics because of the unusually small size of the components, leads and pads.

### Preferred embodiments

### Bismaleimide compound

The present invention relates to a bismaleimide compound, which is represented by Formula (1) or (2): 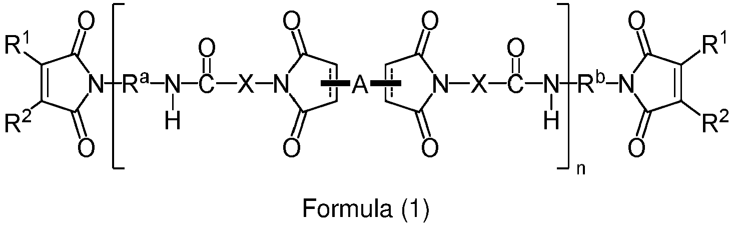 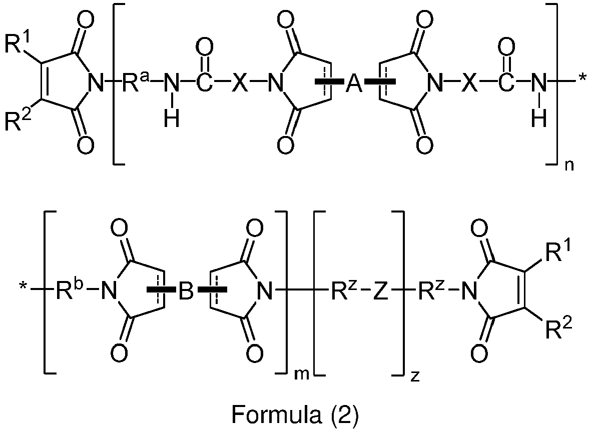 wherein:
A, B and Z are independently and at each occurrence independently from each other a binding unit comprising one or more of an aliphatic, aromatic,
or siloxane moiety, wherein optionally one or more of A, B and Z contains a cardo center or spiro center;
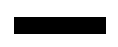 represents one single bond or two single bonds;
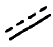 represents a single bond or double bond;
R^{a} and R^{b} are independently and at each occurrence independently from each other a binding unit comprising one or more of an aliphatic, aromatic, or siloxane moiety;
R^{z} is R^{a} or R^{b};
X is at each occurrence independently from each other a binding unit comprising one or more of an aliphatic, aromatic, or siloxane moiety;
R¹ is H or alkyl having 1 to 5 carbon atoms, preferably H or CH₃;
R² is H or alkyl having 1 to 5 carbon atoms, preferably H or CH₃;
n is an integer from 1 to 60, preferably 1 to 50, more preferably 2 to 30, and most preferably 3 to 20;
m is an integer from 0 to 60, preferably 0 to 50, more preferably 0 to 30, and most preferably 0 to 20; and
z is an integer from 0 to 60, preferably 0 to 50, more preferably 0 to 30, and most preferably 0 to 20;
wherein at least one of m or z is ≠ 0, preferably at least one of m or z is ≥ 1, more preferably at least one of m or z ≥ 2, most preferably at least one of m or z is ≥ 3.

The binding sites marked with * in Formula (2) are connected to one another. The bismaleimide compounds according to Formula (2) comprise two or three different repeating units, which are represented by the repeating units marked by the indices m, n and z, respectively. The compounds may thus be regarded as co-oligomers. Here, the different repeating units may form blocks (block cooliogmer), may alter (alternating co-oligomer) or may be randomly distributed throughout the co-oligomer (random co-oligomer).

It is preferred that A and B are independently and at each occurrence independently from each other divalent or polyvalent, preferably divalent or tetravalent, binding units.

If A and/or B represent(s) a polyvalent binding unit, such polyvalent binding unit preferably binds to two carbon atoms of each of the adjacent cyclic imide moieties. If A and/or B represent(s) a tetravalent binding unit, such tetravalent binding unit preferably binds to two carbon atoms of each of the adjacent cyclic imide moieties.

In a preferred embodiment of the present invention m is 0. In this case the bismaleimide compound according to Formula (2) is represented by Formula (2a): 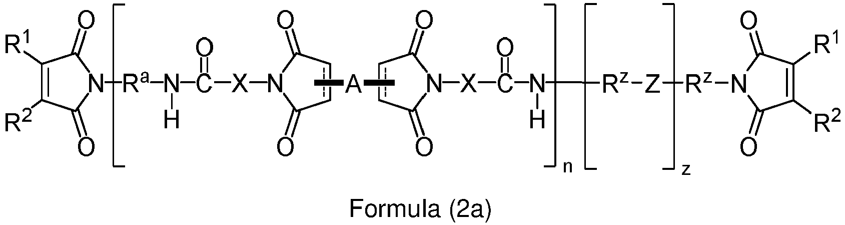 wherein the definitions of Formula (2) apply, correspondingly.

In an alternative preferred embodiment of the present invention z is 0. In this case the bismaleimide compound according to Formula (2) is represented by Formula (2b): 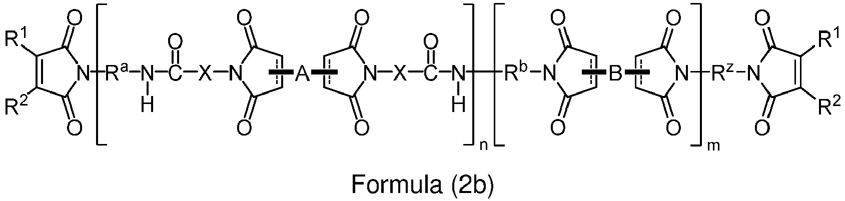 wherein the definitions of Formula (2) apply, correspondingly.

Preferably, A, B and Z are independently and at each occurrence independently from each other a substituted or unsubstituted aliphatic moiety having 2 to 100 carbon atoms, a substituted or unsubstituted hydrocarbon aromatic moiety having 6 to 100 carbon atoms, a substituted or unsubstituted heteroaromatic moiety having 4 to 100 carbon atoms, a substituted or unsubstituted siloxane moiety having 2 to 50 silicon atoms, preferably a dimethylsiloxane, methylphenylsiloxane, diphenylsiloxane moiety, or a combination thereof, wherein optionally one or more of A, B and Z contains a cardo center or spiro center.

Preferably, R^{a} and R^{b} are independently and at each occurrence independently from each other a substituted or unsubstituted aliphatic moiety having 2 to 100 carbon atoms, a substituted or unsubstituted hydrocarbon aromatic moiety having 6 to 100 carbon atoms, a substituted or unsubstituted heteroaromatic moiety having 4 to 100 carbon atoms, a substituted or unsubstituted siloxane moiety having 2 to 50 silicon atoms, preferably a dimethylsiloxane, methylphenylsiloxane, diphenylsiloxane moiety, or a combination thereof; and
R^{z} is R^{a} or R^{b}.

Preferably, X is at each occurrence independently from each other a substituted or unsubstituted aliphatic moiety having 2 to 100 carbon atoms, a substituted or unsubstituted hydrocarbon aromatic moiety having 6 to 100 carbon atoms, a substituted or unsubstituted heteroaromatic moiety having 4 to 100 carbon atoms, a substituted or unsubstituted siloxane moiety having 2 to 50 silicon atoms, preferably a dimethylsiloxane, methylphenylsiloxane, diphenylsiloxane moiety, or a combination thereof.

In a preferred embodiment of the present invention, the bismaleimide compound according to Formula (1) is represented by Formula (3a) or (3b) and the bismaleimide compound according to Formula (2) is represented by Formula (4a) or (4b): 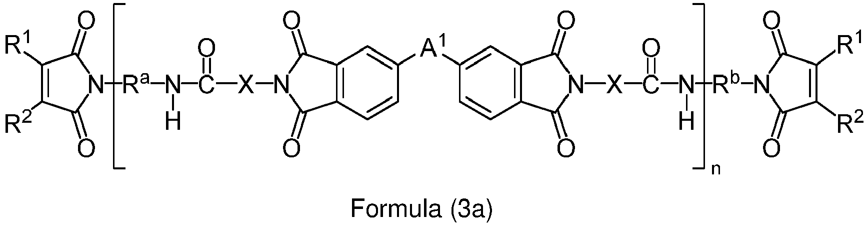 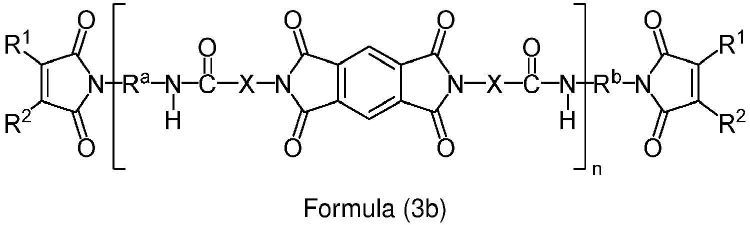 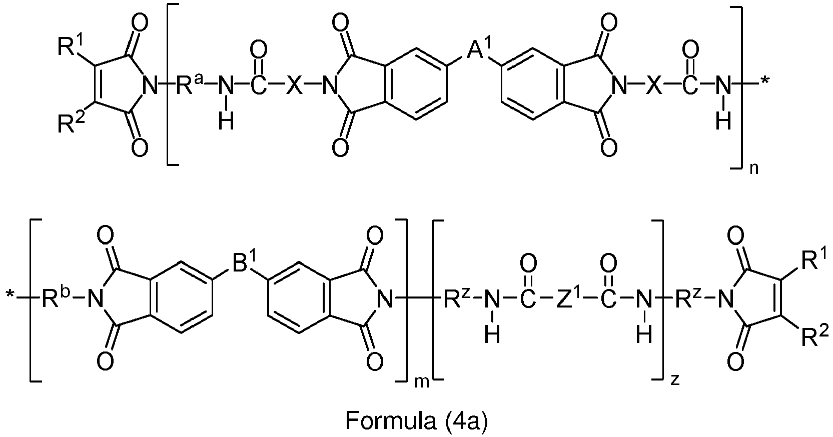 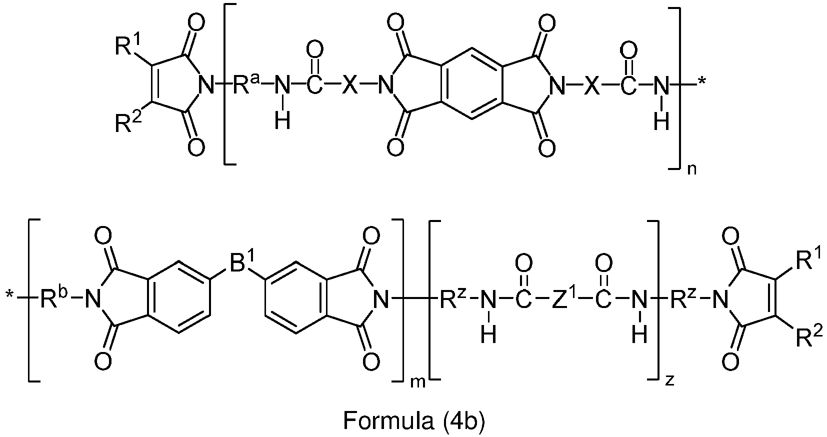 wherein:
A¹, B¹ and Z¹ are independently and at each occurrence independently from each other a binding unit comprising one or more of an aliphatic, aromatic, or siloxane moiety, wherein optionally one or more of A¹, B¹ and Z¹ contains a cardo center or spiro center;
R^{a} and R^{b} are independently and at each occurrence independently from each other a substituted or unsubstituted aliphatic moiety having 2 to 100 carbon atoms, a substituted or unsubstituted hydrocarbon aromatic moiety having 6 to 100 carbon atoms, a substituted or unsubstituted heteroaromatic moiety having 4 to 100 carbon atoms, a substituted or unsubstituted siloxane moiety having 2 to 50 silicon atoms, preferably a dimethylsiloxane, methylphenylsiloxane, diphenylsiloxane moiety, or a combination thereof;
R^{z} is R^{a} or R^{b};
X is at each occurrence independently from each other a substituted or unsubstituted aliphatic moiety having 2 to 100 carbon atoms, a substituted or unsubstituted hydrocarbon aromatic moiety having 6 to 100 carbon atoms, a substituted or unsubstituted heteroaromatic moiety having 4 to 100 carbon atoms, a substituted or unsubstituted siloxane moiety having 2 to 50 silicon atoms, preferably a dimethylsiloxane, methylphenylsiloxane, diphenylsiloxane moiety, or a combination thereof;
R¹ is H or alkyl having 1 to 5 carbon atoms, preferably H or CH₃;
R² is H or alkyl having 1 to 5 carbon atoms, preferably H or CH₃;
n is an integer from 1 to 60, preferably 1 to 50, more preferably 2 to 30, and most preferably 3 to 20;
m is an integer from 0 to 60, preferably 0 to 50, more preferably 0 to 30, and most preferably 0 to 20; and
z is an integer from 0 to 60, preferably 0 to 50, more preferably 0 to 30, and most preferably 0 to 20;
wherein at least one of m or z is ≠ 0, preferably at least one of m or z is ≥ 1, more preferably at least one of m or z ≥ 2, most preferably at least one of m or z is ≥ 3.

The binding sites marked with * in Formulae (4a) and (4b) are connected to one another. The bismaleimide compounds according to Formula (4a) or (4b) comprise two or three different repeating units, which are represented by the repeating units marked by the indices m, n and z, respectively. The compounds may thus be regarded as co-oligomers. Here, the different repeating units may form blocks (block cooliogmer), may alter (alternating co-oligomer) or may be randomly distributed throughout the co-oligomer (random co-oligomer).

If m = 0, the bismaleimide compound according to Formula (4a) is represented by Formula (4aa): 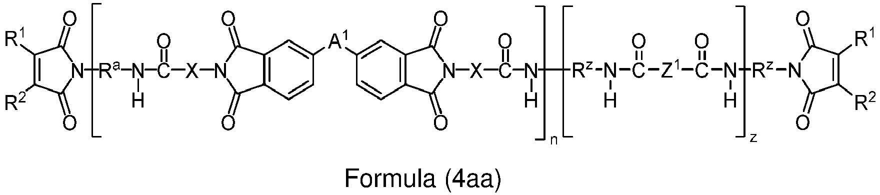 wherein the definitions of Formula (4a) apply, correspondingly.

If z = 0, the bismaleimide compound according to Formula (4a) is represented by Formula (4ab): 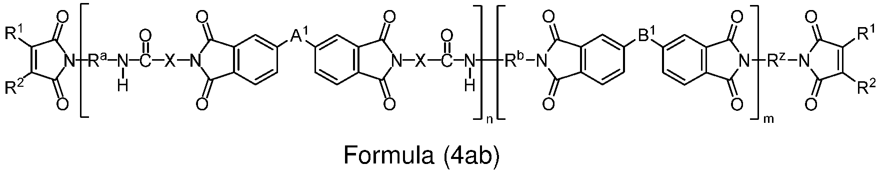 wherein the definitions of Formula (4a) apply, correspondingly.

If m = 0, the bismaleimide compound according to Formula (4b) is represented by Formula (4ba): 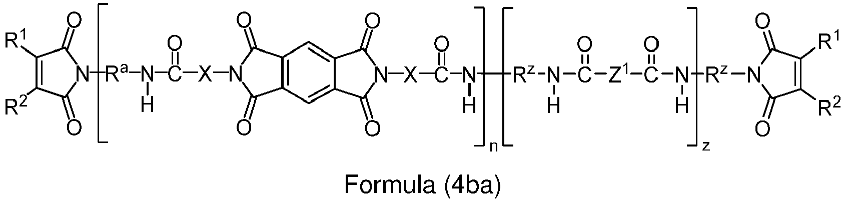 wherein the definitions of Formula (4b) apply, correspondingly.

If z = 0, the bismaleimide compound according to Formula (4b) is represented by Formula (4bb): 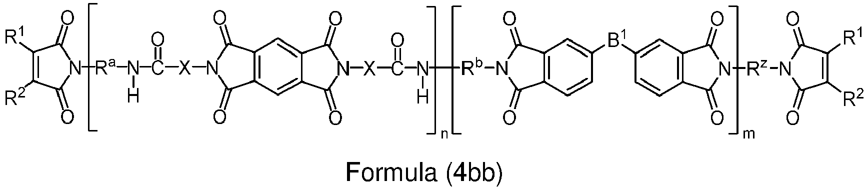 wherein the definitions of Formula (4b) apply, correspondingly.

Preferably, A¹, B¹ and Z¹ are independently and at each occurrence independently from each other a substituted or unsubstituted aliphatic moiety having 2 to 80 carbon atoms, a substituted or unsubstituted hydrocarbon aromatic moiety having 6 to 80 carbon atoms, a substituted or unsubstituted heteroaromatic moiety having 4 to 80 carbon atoms, a substituted or unsubstituted siloxane moiety having 2 to 50 silicon atoms, preferably a dimethylsiloxane, methylphenylsiloxane, diphenylsiloxane moiety, or a combination thereof, wherein A¹, B¹and Z¹ optionally contains a cardo center or spiro center.

More preferably, A¹, B¹ and Z¹ are independently and at each occurrence independently from each other represented by Formula (5):

-G²¹-(A²¹-G²²)ₖ-A²²-(G²³-A²³)ₗ-G²⁴- Formula (5)

wherein:
A²¹, A²² and A²³ are independently and at each occurrence independently from each other a divalent aromatic group, preferably having 4 to 30 carbon atoms, divalent aliphatic group, preferably having 2 to 20 carbon atoms, or divalent mixed aromatic aliphatic group, preferably having 6 to 30 carbon atoms, which may contain one or more heteroatoms selected from N, O and S and which may be substituted with one or more substituents selected from the list consisting of halogen, alkyl having 1 to 10 carbon atoms, alkoxy having 1 to 10 carbon atoms, aryl having 6 to 10 carbon atoms and aryloxy having 6 to 10 carbon atoms, wherein one or more of A²¹, A²² and A²³ optionally contains a cardo center or spiro center;
G²¹, G²², G²³ and G²⁴ are independently and at each occurrence independently from each other -O-, -S-, -CO-, -(CO)-O-, -O-(CO)-, -S-(CO)-, -(CO)-S-, -O-(CO)-O-, -(CO)-NR⁰¹-, -NR⁰¹-(CO)-, -NR⁰¹-(CO)-NR⁰²-, -NR⁰¹-(CO)-O-, -O-(CO)-NR⁰¹-, -OCH₂-, -CH₂O-, -SCH₂-, -CH₂S-, -CF₂O-, -OCF₂-, -CF₂S-, -SCF₂-, -CH₂CH₂-, -(CH₂)₄-, -CF₂CH₂-, -CH₂CF₂-, -CF₂CF₂-, -CH=N-, -N=CH-, -N=N-, -CH=CR⁰¹-, -CY⁰¹=CY⁰²-, -C≡C-, -CH=CH-(CO)-O-, -O-(CO)-CH=CH-, or a single bond, wherein R⁰¹ and R⁰² are independently from each other H or alkyl having 1 to 5 carbon atoms;
Y⁰¹ and Y⁰² are independently from each other H, alkyl having 1 to 5 carbon atoms, phenyl, F, Cl, or CN; and
k and I are independently of each other 0, 1, 2, 3 or 4, preferably 0 or 1, more preferably k and I are 1.

Preferably, A²¹, A²² and A²³ are independently and at each occurrence independently from each other represented by one of Formulae (6a) to (6u): 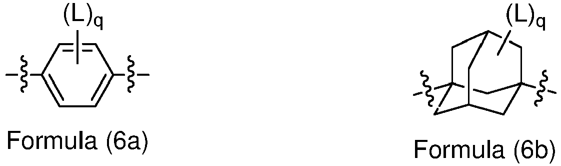 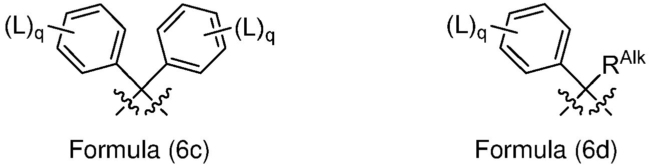 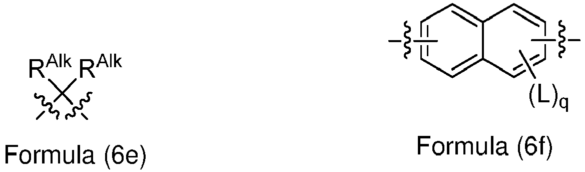 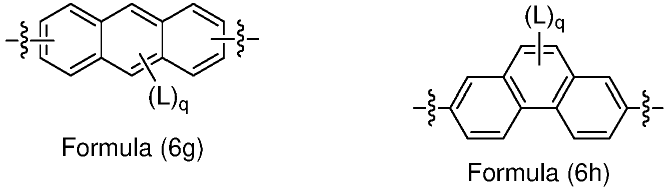 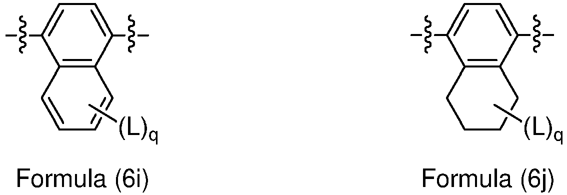 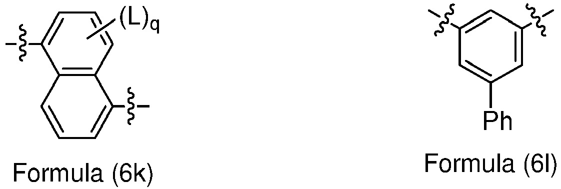 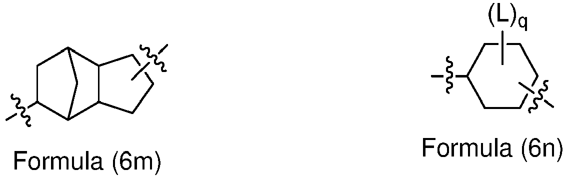 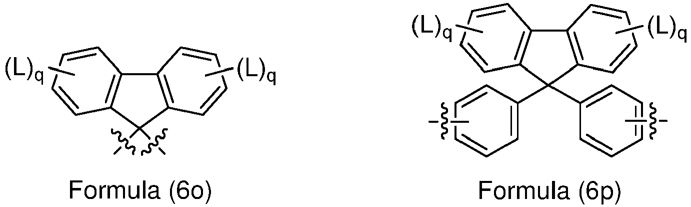 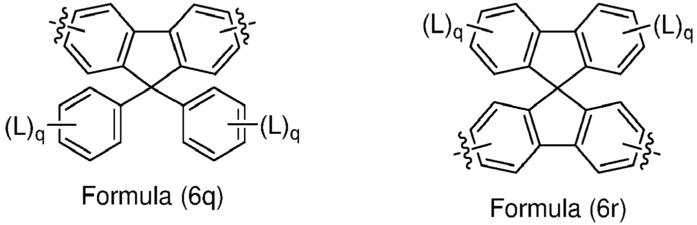 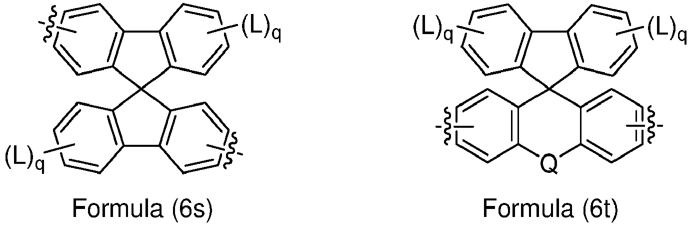 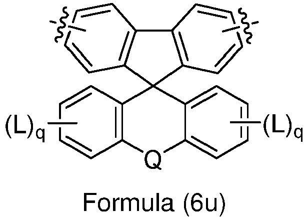 wherein 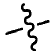 represents a binding site;
L is alkyl having 1 to 5 carbon atoms, halogenyl, Ph or CN, preferably methyl, F, Cl, Ph or CN;
R^{Alk} is alkyl having 1 to 5 carbon atoms;
Q is O, S or CH₂; and
q is an integer from 0 to 4, preferably from 0 to 2, more preferably 0 or 1, most preferably 0.

In a preferred embodiment of the present invention, R^{a} and R^{b} are independently from each other a substituted or unsubstituted aliphatic moiety having 2 to 60 carbon atoms, preferably 10 to 50 carbon atoms, more preferably 10 to 36 carbon atoms; and
R^{z} is R^{a} or R^{b}.

In a more preferred embodiment of the present invention, R^{a} and R^{b} are independently and at each occurrence independently from each other represented by Formula (7a) or (7b): 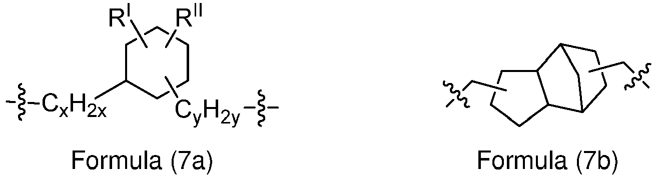 wherein 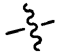 represents a binding site;
x and y are independently from each other an integer from 0 to 10, preferably from 1 to 8, more preferably from 3 to 8;
R^{I} and R^{II} are independently from each other a linear alkyl group having 1 to 10 carbon atoms, preferably 1 to 8 carbon atoms, or a branched alkyl group having 3 to 10 carbon atoms, preferably 3 to 8 carbon atoms, more preferably -C₆H₁₃, -C₈H₁₇ or -CH₂CH(C₂H₅)C₄H₉.

In a most preferred embodiment of the present invention, R^{a} and R^{b} are independently and at each occurrence independently from each other represented by Formula (8a) or (8b): 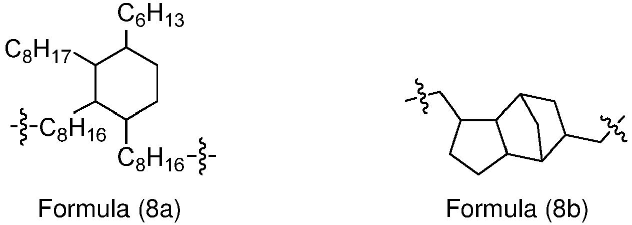 wherein 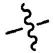 represents a binding site.

In a preferred embodiment of the present invention, X is a substituted or unsubstituted aliphatic moiety having 1 to 30 carbon atoms, preferably 1 to 20 carbon atoms, more preferably 1 to 10 carbon atoms, and most preferably 1 to 5 carbon atoms.

Particularly preferred bismaleimide compounds according to the present invention are:

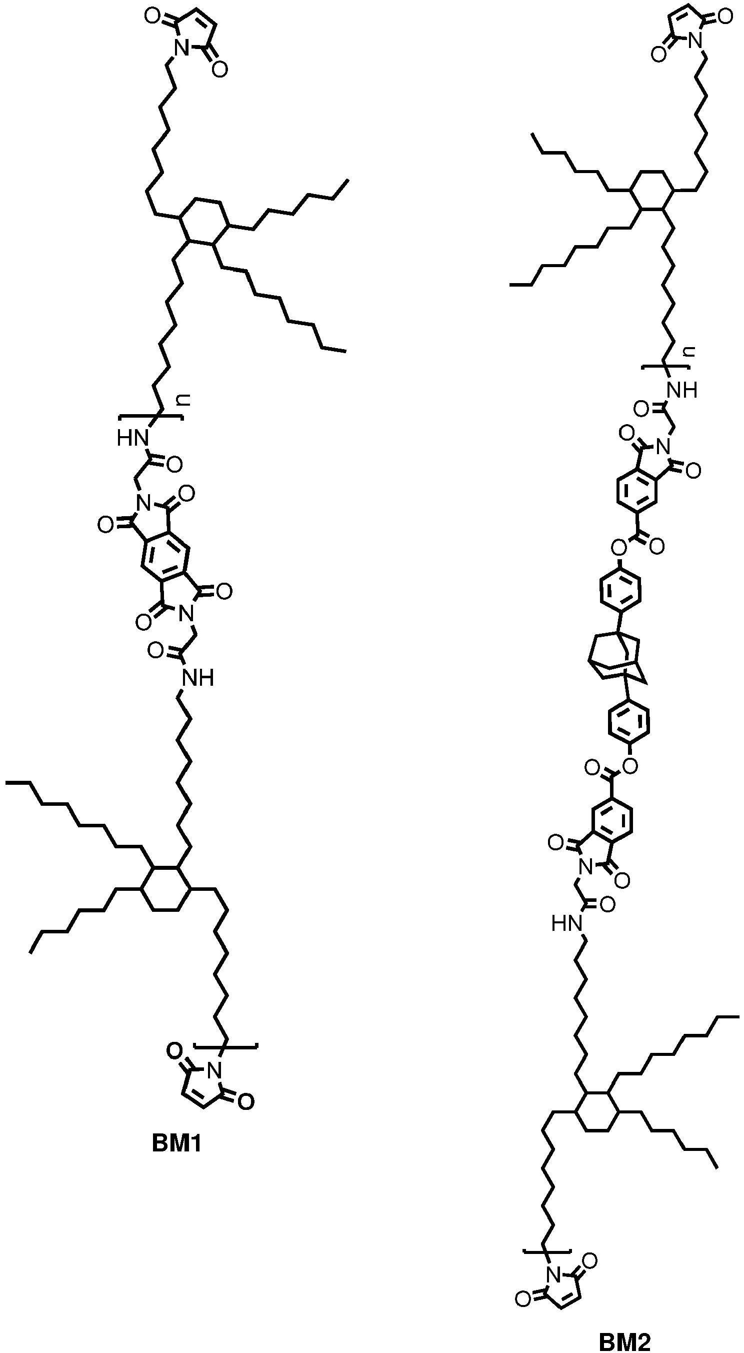

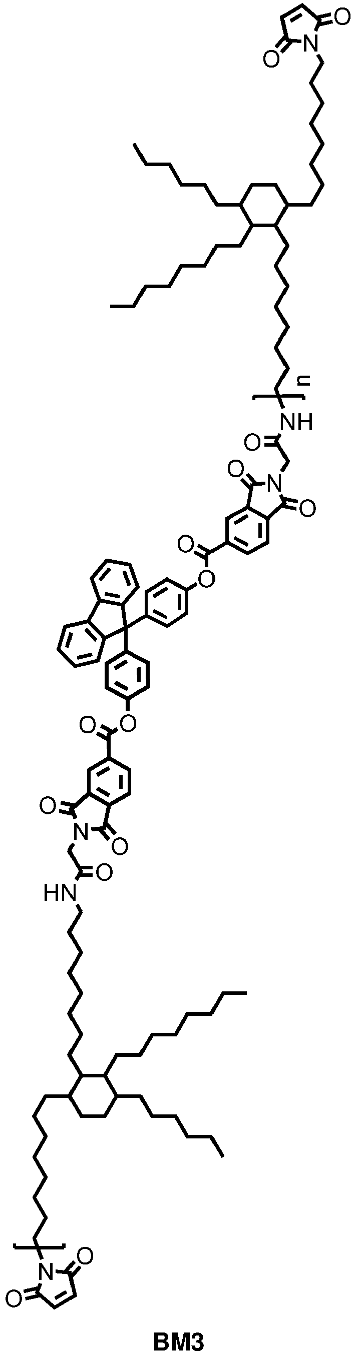

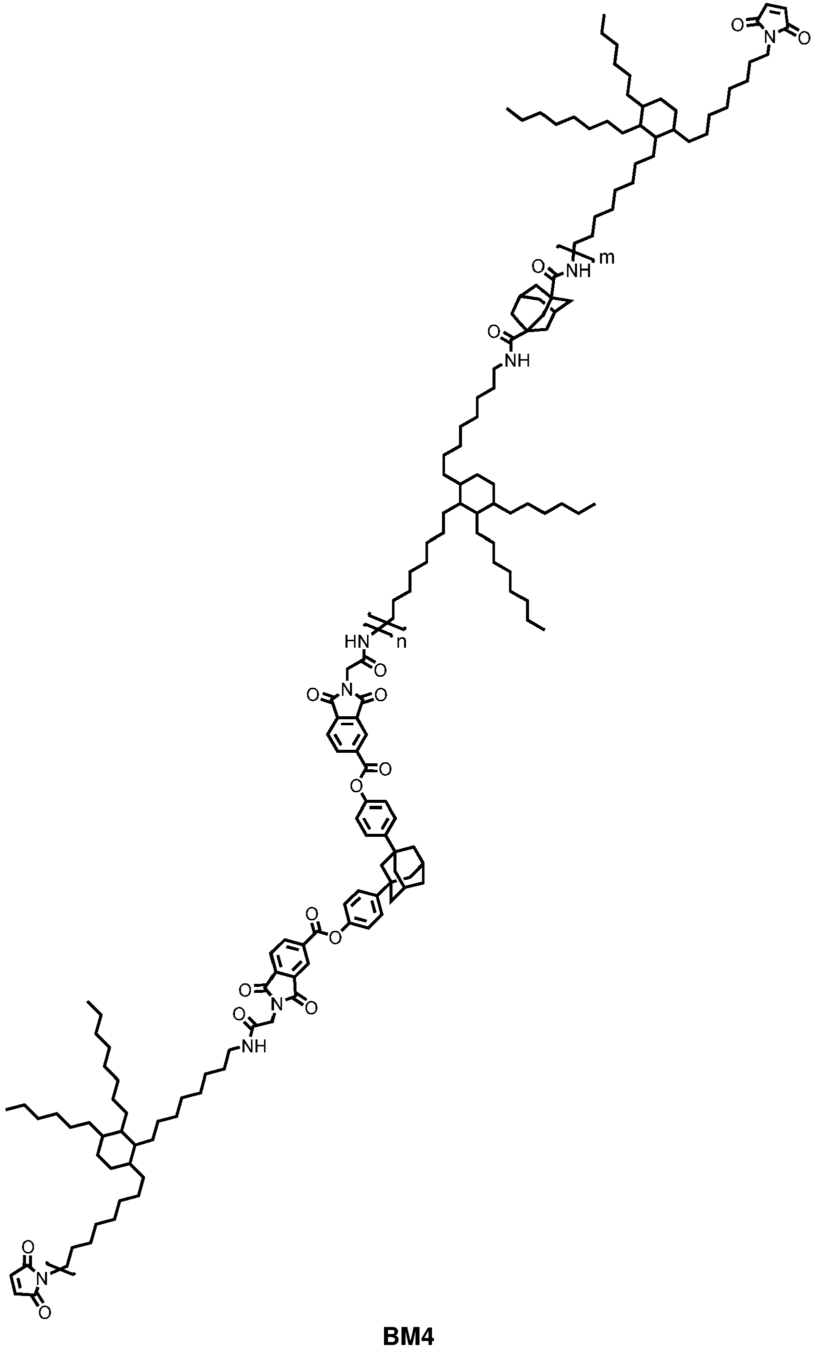

The bismaleimide compound of the present invention can be prepared by any standard synthesis. Usually, the compound is retrosynthetically cut into smaller units and formed stepwise from suitable precursor compounds. For this purpose, known standard reactions such as e.g. amide formation, imide formation, ester formation and related acid activations, etc. can be used. It has proven to be particularly advantageous to attach the maleimide groups at a later stage of the synthesis, typically at the very last step of the synthesis. By doing so, undesirable side-reactions or premature polymerization of the compound can be avoided.

Illustrative implementations for retrosynthesis are given by Schemes 1 and 2 below, which should in no way be interpreted as limiting the present invention.

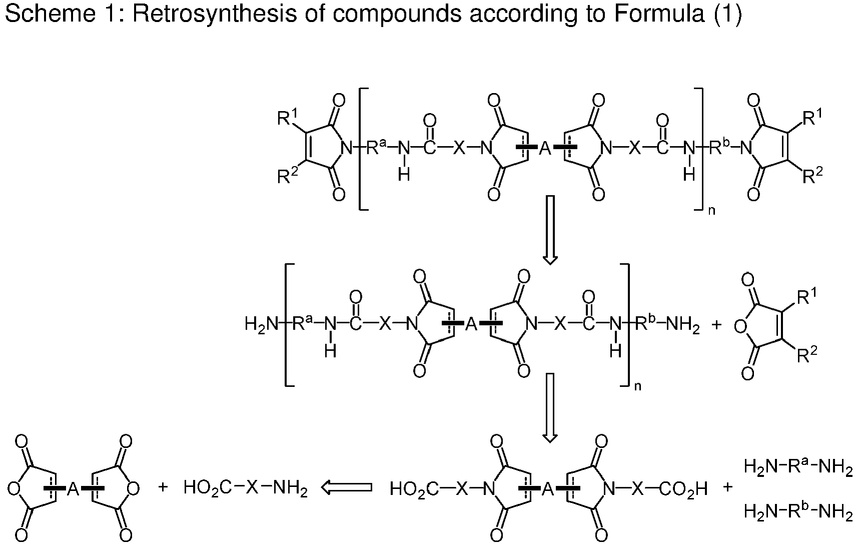

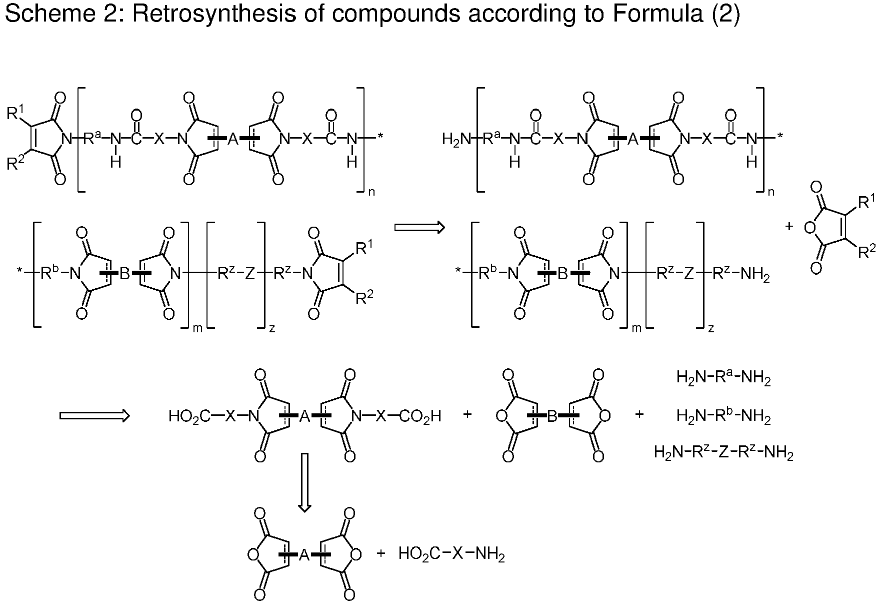

The maleimide group is a functional group capable to undergo a polymerization reaction such as, for example, a radical or ionic chain polymerization, a polyaddition or a polycondensation, or capable to undergo a polymerization analogous reaction such as, for example, an addition or a condensation on a polymer backbone.

The present invention further provides a method for forming a dielectric polymer material comprising repeating units derived from one or more of the bismaleimide compound. The dielectric polymer material may be linear or crosslinked.

The method for forming a dielectric polymer material according to the present invention comprises the following steps:
(i) providing a formulation comprising one or more bismaleimide compound according to the present invention; and
(ii) curing said formulation.

Preferably, the formulation provided in step (i) further comprises one or more additional compound being capable to react with the bismaleimide compound according to the present invention to preferably form a copolymer. Using basic chemical knowledge, the skilled person is able to find and select for a given bismaleimide compound of the present invention suitable additional compounds which are capable to react with the first mentioned to preferably form a copolymer.

Preferred additional compounds being capable to react with the bismaleimide compound according to the present invention are selected from the list consisting of acrylates, epoxides, olefins, vinyl ethers, vinyl esters, polythiols, polyamines, and polymaleimides.

Preferred acrylates are acrylic acid, methacrylic acid, methyl acrylate, methyl methacrylate, methyl cyanoacrylate, ethyl acrylate, ethyl methacrylate, ethyl cyanoacrylate, propyl acrylate, propyl methacrylate, propyl cyanoacrylate, butyl acrylate, butyl methacrylate, butyl cyanoacrylate, pentyl acrylate, pentyl methacrylate, pentyl cyanoacrylate, hexyl acrylate, hexyl methacrylate, hexyl cyanoacrylate, heptyl acrylate, heptyl methacrylate, heptyl cyanoacrylate, octyl acrylate, octyl methacrylate, octyl cyanoacrylate, ethylene glycol dimethacrylate, 2-ethylhexyl acrylate, glycidyl methacrylate, (hydroxyethyl)acrylate, (hydroxyethyl)methacrylate, methyl 2-chloroacrylate, and methyl 2-fluoroacrylate.

Preferred epoxides are ethylene oxide, propylene oxide, butylene oxide, pentylene oxide, hexylene oxide, heptylene oxide, octylene oxide, glycidamide, glycidol, styrene oxide , 3,4-epoxytetrahydrothiophene-1 ,1-dioxide, ethyl 2,3-epoxypropionate, methyl 2-methylglycidate, methyl glycidyl ether, ethyl glycidyl ether, diglycidyl ether, cyclopentene oxide, cyclohexene oxide, cycloheptene oxide, cyclooctene oxide, and stilbene oxide.

Preferred olefins are ethylene, propylene, butylene, pentylene, hexylene, heptylene, octylene, isoprene styrene, and vinylethylene.

Preferred vinyl ethers are divinyl ether, methylvinylether, ethylvinylether, propylvinylether, butylvinylether, pentylvinylether, hexylvinylether, heptylvinylether, and octylvinylether.

Preferred vinyl esters are vinyl formate, vinyl acetate, vinyl propanoate, vinyl butanoate, vinyl pentanoate, vinyl hexanoate, vinyl heptanoate, vinyl octanoate, vinyl nonanoate, vinyl decanoate, vinyl acrylate, vinyl methacrylate, vinyl benzoate, vinyl 4-tert-butylbenzoate, vinyl cinnamate, and vinyl trifluoroacetate.

Preferred polythiols are organosulfur compounds with two or more thiol functional groups. Particularly preferred polythiols are selected from the list consisting of HS-(CₙH₂ₙ)-SH, wherein n = 2 to 20, preferably 2 to 12; CₙH₂ₙ₋₁(SH)₃, wherein n = 3 to 20, preferably 3 to 12; HS-Ar-SH, wherein Ar = substituted or unsubstituted C₆-C₂₀ arylene; and HS-(CH₂)ₘ-Ar-(CH₂)ₘ-SH, wherein Ar = substituted or unsubstituted C₆-C₂₀ arylene and m = 1 to 12.

Preferred polyamines are organoamine compounds with two or more amino functional groups. Particularly preferred polyamines are selected from the list consisting of H₂N-(CₙH₂ₙ)-NH₂, wherein n = 2 to 20, preferably 2 to 12; H₂N-(CₙH₂ₙNH)-NH₂, wherein n = 2 to 20, preferably 2 to 12; CₙH₂ₙ₋₁(NH₂)₃, wherein n = 3 to 20, preferably 3 to 12; H₂N-Ar-NH₂, wherein Ar = substituted or unsubstituted C₆-C₂₀ arylene; and H₂N-(CH₂)ₘ-Ar-(CH₂)ₘ-H₂N, wherein Ar = substituted or unsubstituted C₆-C₂₀ arylene and m = 1 to 12. Preferred polymaleimides are maleimide end-capped polyimides as described in US 2004/0225026 A1 and US 2017/0152418 A1.

It is preferred that the polymaleimides are bismaleimides selected from compounds represented by the following Formula (A) or Formula (B): 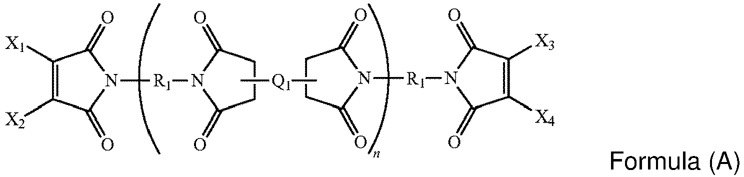 wherein R₁ and Q₁ are independently selected from the list consisting of structures derived from unsubstituted or substituted aliphatic, alicyclic, alkenyl, aryl, heteroaryl, siloxane, poly(butadiene-co-acrylonitrile) and poly(alkylene oxide); X₁ to X₄ are each independently H or an alkyl group with 1 to 6 C atoms; and n = 0 to 30; 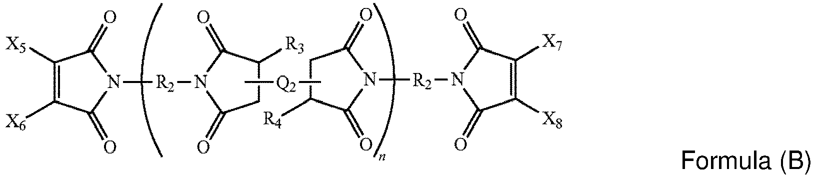 wherein R₂ and Q₂ are independently selected from the list consisting of structures derived from unsubstituted or substituted aliphatic, alicyclic, alkenyl, aryl, heteroaryl, siloxane, poly(butadiene-co-acrylonitrile) and poly(alkylene oxide); X₅ to X₈ are each independently H or an alkyl group with 1 to 6 C atoms; R₃ and R₄ are each independently H or CH₃, wherein at least one of R₃ and R₄ is CH₃; and n = 0 to 30.

In a preferred embodiment of Formula (A) and (B), the structure derived from unsubstituted or substituted aliphatic, alicyclic, alkenyl, aryl, heteroaryl, siloxane, poly(butadiene-co-acrylonitrile) and poly(alkylene oxide) are alkyl group, alkenyl group, alkynyl group, hydroxyl group, oxo group, alkoxy group, mercapto group, cycloalkyl group, substituted cycloalkyl group, heterocyclic group, substituted heterocyclic group, aryl group, substituted aryl group, heteroaryl group, substituted heteroaryl group, aryloxy group, substituted aryloxy group, halogen, haloalkyl group, cyano group, nitro group, nitrone group, amino group, amide group, -C(O)H, acyl group, oxyacyl group, carboxyl group, carbamate group, sulfonyl group, sulfonamide group, sulfuryl group, or -C(O)-, -S-, -S(O)₂-, -OC(O)-O-, -NA-C(O)-, -NAC(O)-NA-, -OC(O)-NA-, (in the formula, A is H or an alkyl group with 1 to 6 carbons), and it is preferable that one terminal further contains a substituent.

Preferred substituents are alkyl group, alkenyl group, alkynyl group, hydroxyl group, oxo group, alkoxy group, mercapto group, cycloalkyl group, substituted cycloalkyl group, heterocyclic group, substituted heterocyclic group, aryl group, substituted aryl group, heteroaryl group, substituted heteroaryl group, aryloxy group, substituted aryloxy group, halogen, haloalkyl group, cyano group, nitro group, nitrone group, amino group, amide group, -C(O)H, acyl group, oxyacyl group, carboxyl group, carbamate group, sulfonyl group, sulfonamide group, sulfuryl group, or -C(O)-, -S-, -S(O)₂-, -OC(O)-O-, -NA-C(O)-, -NAC(O)-NA-, -OC(O)-NA-, (in the formula, A is H or an alkyl group with 1 to 6 carbons), acyl group, oxyacyl group, carboxyl group, carbamate group, sulfonyl group, sulfonamide group, or sulfuryl group.

In a more preferred embodiment of Formula (A) and (B), R¹ and R², and Q¹ and Q² are independently selected from the list consisting of substituted or unsubstituted aliphatic, alicyclic, alkenyl, aromatic, siloxane, poly(butadiene-co-acrylonitrile), or poly(alkylene oxide) moieties.

Preferred aliphatic moieties are straight or branched chain C₁-C₅₀ alkylene, more preferably straight or branched chain C₁-C₃₆ alkylene.

Preferred alicyclic moieties are both aliphatic and cyclic and contain one or more all-carbon rings which may be either substituted or unsubstituted and which may be optionally condensed and/or bridged. Preferred alicyclic moieties have 3 to 72 C atoms, more preferably 3 to 36 C atoms. Particularly preferred alicyclic moieties are represented by -Sp¹-Cy-Sp²-, wherein Sp¹ and Sp² denote independently of each other alkylene having 1 to 12 C atoms or a single bond; G denotes cycloalkylene having 3 to 12 C atoms which is optionally mono- or polysubstituted by alkyl having 1 to 12 C atoms.

Preferred alkenyl moieties are straight or branched chain hydrocarbyl moieties having at least one carbon-carbon double bond, and having in the range of about up to 100 C atoms. More preferred alkenyl moieties are C₂-C₅₀ alkenylene, most preferably C₂-C₃₆ alkenylene.

Preferred aromatic moieties include (i) hydrocarbon aromatic moieties such as arylene groups having 6 to 20 C atoms, more preferably 6 to 14 C atoms, which may be either substituted or unsubstituted, and (ii) heteroaromatic moieties having 3 to 20 C atoms, preferably 3 to 14 C atoms, and one or more heteroatoms selected from N, O, S and P in the aromatic ring structure, which may be either substituted or unsubstituted.

Preferred siloxane moieties are selected from -[R^{a}R^{b}Si-O]ₙ-R^{a}R^{b}Si-, wherein R^{a} and R^{b} are independently H or C₁-C₆ alkyl, and n = 1 to 1000, more preferably 1 to 100.

Preferred poly(alkylene oxide) moieties are poly(C₁-C₁₂ alkylene oxide) moieties.

Preferably, the molar ratio between the bismaleimide compounds of the present invention and the additional compounds being capable to react with the bismaleimide compounds in the formulation is from 0.1:100 to 100:0.1.

It is further preferred that the formulation provided in step (i) comprises one or more inorganic or organic fillers. Preferred inorganic fillers are selected from the list consisting of nitrides, titanates, diamond, oxides, sulfides, sulfites, sulfates, silicates and carbides, which may be surface-modified with a capping agent. More preferably, the inorganic filler is selected from the list consisting of AIN, Al₂O₃, BN, BaTiOs, B₂O₃, Fe₂O₃, SiO₂, TiO₂, ZrO₂, PbS, SiC, diamond and glass particles, which may be surface-modified with a capping agent. Preferred organic fillers are diamondoids or organic polymer particles. Preferred diamondoids are adamantane (C₁₀H₁₆), iceane (C₁₂H₁₈), BC-8 (C₁₄H₂₀), diamantane (C₁₄H₂₀), triamantane (C₁₈H₂₄), isotetramantane (C₂₂H₂₈), pentamantane (C₂₆H₃₂ and C₂₅H₃₀), cyclohexamantane (C₂₆H₃₀) and super-adamantane (C₃₀H₃₆).

Preferably, the total content of the inorganic or organic filler material in the composition is in the range from 0.001 to 90 wt.-%, more preferably 0.01 to 70 wt.-% and most preferably 0.01 to 50 wt.-%, based on the total weight of the composition.

In a preferred embodiment, the formulation is provided in step (i) to a surface of a substrate to form a dielectric polymer material on said surface after curing in step (ii). The substrate is preferably a substrate of an electronic or a microelectronic device.

Preferably, the formulation is provided in step (i) as layer having an average thickness of 0.5 to 50 µm, more preferably 2 to 30 µm, and most preferably 3 to 15 µm, in a single coating.

The method by which the composition is applied in step (i) is not particularly limited. Preferred application methods are dispensing, dipping, screen printing, stencil printing, roller coating, spray coating, slot coating, slit coating, spin coating, gravure printing, flexo printing or inkjet printing.

The bismaleimide compounds of the present invention may be provided in the form of a formulation suitable for gravure printing, flexo printing and/or ink-jet printing. For the preparation of such formulations, ink base formulations as known from the state of the art can be used.

Alternatively, the bismaleimide compound of the present invention may be provided in the form of a formulation suitable for photolithography. The photolithography process allows the creation of a photopattern by using light to transfer a geometric pattern from a photomask to a light-curable composition. Typically, such light-curable composition contains a photochemically activatable polymerization initiator. For the preparation of such formulations, photoresist base formulations as known from the state of the art can be used.

Without wishing to be bound by theory, curing of the bismaleimide compounds according to the present invention may take place via various types of reaction such as e.g. radical polymerization, ionic polymerization, Michael addition and/or cycloaddition reactions.

It is preferred that the formulation is cured in step (ii) by exposure to heat, preferably at a temperature in the range from 25 to 200°C, more preferably at a temperature in the range from 25 to 150°C, and /or by exposure to radiation.

It is further preferred that the formulation contains an initiator for free radical polymerization or an initiator for ionic polymerization.

Preferably, the initiators for radical polymerization are activated thermally by exposure to heat or photochemically by exposure to radiation such as UV and/or visible light.

Preferred initiators for radical polymerization are: tert-amyl peroxybenzoate, 4,4-azobis(4-cyanovaleric acid), 1,1'-azobis(cyclohexanecarbonitrile), 2,2'-azobisisobutyronitrile (AIBN), benzoyl peroxide, 2,2-bis(tert-butylperoxy)butane, 1,1-bis(tert-butylperoxy)cyclohexane, 2,5-bis(tert-butylperoxy)-2,5-dimethylhexane, 2,5-bis(tert-butylperoxy)-2,5-dimethyl-3-hexyne, bis(1-(tert-butylperoxy)-1-methylethyl)benzene, 1,1-bis(tert-butylperoxy)-3,3,5-trimethylcyclohexane, tert-butyl hydroperoxide, tert-butyl peracetate, tert-butyl peroxide, tert-butyl peroxybenzoate, tert-butylperoxy isopropyl carbonate, cumene hydroperoxide, cyclohexanone peroxide, dicumyl peroxide, lauroyl peroxide, 2,4-pentanedione peroxide, peracetic acid, and potassium persulfate. Typically, such initiators are radical polymerization initiators which may be thermally activated.

Further preferred initiators for radical polymerization are: acetophenone, p-anisil, benzil, benzoin, benzophenone, 2-benzoylbenzoic acid, 4,4'-bis(diethylamino)benzophenone, 4,4'-bis(dimethylamino)benzophenone, benzoin methyl ether, benzoin isopropyl ether, benzoin isobutyl ether, benzoin ethyl ether, 4-benzoylbenzoic acid, 2,2'-bis(2-chlorophenyl)-4,4',5,5'-tetraphenyl-1,2'-biimidazole, methyl 2-benzoylbenzoate, 2-(1,3-benzodioxol-5-yl)-4,6-bis(trichloromethyl)-1,3,5-triazine, 2-benzyl-2-(dimethylamino)-4'-morpholinobutyrophenone, (±)-camphorquinone, 2-chlorothioxanthone, 4,4'-dichlorobenzophenone, 2,2-Diethoxyacetophenone, 2,2-Dimethoxy-2-phenylacetophenone, 2,4-diethylthioxanthen-9-one, diphenyl(2,4,6-trimethylbenzoyl)phosphine oxide, 1,4-dibenzoylbenzene, 2-ethylanthraquinone, 1-hydroxycyclohexyl phenyl ketone, 2-hydroxy-2-methylpropiophenone, 2-hydroxy-4'-(2-hydroxyethoxy)-2-methylpropiophenone, 2-isopropylthioxanthone, lithium phenyl(2,4,6-trimethylbenzoyl)phosphinate, 2-methyl-4'-(methylthio)-2-morpholino-propiophenone, 2-isonitrosopropiophenone, 2-phenyl-2-(p-toluenesulfonyl-oxy)acetophenone, and phenylbis(2,4,6-trimethylbenzoyl)phosphine oxide. Typically, such initiators are radical polymerization initiators which may be photochemically activated.

Preferred initiators for ionic polymerization are: alkyl lithium compounds, alkylamine lithium compounds and pentamethylcyclopentadienyl (Cp*) complexes of titanium, zirconium and hafnium.

Further preferred initiators for ionic polymerization are: bis(4-tert-butylphenyl)iodonium hexafluorophosphate, bis(4-fluorophenyl)iodonium trifluoromethanesulfonate, cyclopropyldiphenylsulfonium tetrafluoroborate, dimethylphenacylsulfonium tetrafluoroborate, diphenyliodonium hexafluorophosphate, diphenyliodonium hexafluoroarsenate, diphenyliodonium trifluoromethanesulfonate, 2-(3,4-dimethoxystyryl)-4,6-bis(trichloromethyl)-1,3,5-triazine, 2-[2-(furan-2-yl)vinyl]-4,6-bis(trichloromethyl)-1,3,5-triazine, 4-isopropyl-4'-methyldiphenyliodonium tetrakis(pentafluorophenyl)borate, 2-[2-(5-methylfuran-2-yl)vinyl]-4,6-bis(trichloromethyl)-1,3,5-triazine, 2-(4-methoxyphenyl)-4,6-bis(trichloromethyl)-1,3,5-triazine, 2-(4-methoxystyryl)-4,6-bis(trichloromethyl)-1,3,5-triazine, (2-methylphenyl)(2,4,6-trimethylphenyl)iodonium trifluoromethanesulfonate, (3-methylphenyl)(2,4,6-trimethylphenyl)iodonium trifluoromethanesulfonate, (4-methylphenyl)(2,4,6-trimethylphenyl)iodonium trifluoromethanesulfonate, 4-nitrobenzenediazonium tetrafluoroborate, (4-nitrophenyl)(phenyl)iodonium trifluoromethanesulfonate, triphenylsulfonium tetrafluoroborate, triphenylsulfonium bromide, tri-p-tolylsulfonium hexafluorophosphate, tri-p-tolylsulfonium trifluoromethanesulfonate, [3-(trifluoromethyl)phenyl](2,4,6-trimethylphenyl)iodonium trifluoromethanesulfonate, and [4-(trifluoromethyl)phenyl](2,4,6-trimethylphenyl)iodonium trifluoromethanesulfonate. Typically, such initiators are cationic polymerization initiators which may be photochemically activated.

Further preferred initiators for ionic polymerization are: acetophenone O-benzoyloxime, 1,2-bis(4-methoxyphenyl)-2-oxoethyl cyclohexylcarbamate, nifedipine, 2-nitrobenzyl cyclohexylcarbamate, 2-(9-oxoxanthen-2-yl)propionic acid 1,5,7-triazabicyclo[4.4.0]dec-5-ene salt, 2-(9-oxoxanthen-2-yl)propionic acid 1,5-diazabicyclo[4.3.0]non-5-ene salt, and 2-(9-oxoxanthen-2-yl)propionic acid 1,8-diazabicyclo[5.4.0]undec-7-ene salt. Typically, such initiators are anionic polymerization initiators which may be photochemically activated.

Exposure to radiation includes exposure to visible light and/or UV light. It is preferred that the visible light is electromagnetic radiation with a wavelength from > 380 to 780 nm, more preferably from > 380 to 500 nm. It is preferred that the UV light is electromagnetic radiation with a wavelength of ≤ 380 nm, more preferably a wavelength from 100 to 380 nm. More preferably, the UV light is selected from UV-A light having a wavelength from 315 to 380 nm, UV-B light having a wavelength from 280 to 315 nm, and UV-C light having a wavelength from 100 to 280 nm. It is preferred that the exposure to radiation includes wavelengths according to g, h, i lines and/or broadband.

As UV light sources Hg-vapor lamps or UV-lasers are possible, as IR light sources ceramic-emitters or IR-laser diodes are possible and for light in the visible area laser diodes are possible.

Preferred UV light sources are light sources having a) a single wavelength radiation with a maximum of < 255 nm such as e.g. 254 nm and 185 nm Hg low-pressure discharge lamps, 193 nm ArF excimer laser and 172 nm Xe2 layer, or b) broad wavelength distribution radiation with a wavelength component of < 255 m such as e.g. non-doped Hg low-pressure discharge lamps.

In a preferred embodiment of the present invention, the light source is a xenon flash light. Preferably, the xenon flash light has a broad emission spectrum with a short wavelength component going down to about 200 nm.

There is further provided a dielectric polymer material, which is obtainable or obtained by the above-mentioned method for forming a dielectric polymer material according to the present invention. The polymer material is preferably a linear or crosslinked polymer, more preferably a linear polymer.

There is further provided a dielectric polymer material, which comprises at least one repeating unit derived from the bismaleimide compound of any one of Formula (1), (2), (2a), (2b), (3a), (3b), (4a), (4b), (4aa), (4ab), (4ba) or (4bb) as defined above.

In a preferred embodiment, the dielectric polymer material comprises at least one repeating unit, which comprises a structural unit represented by Formula (9) or (10): 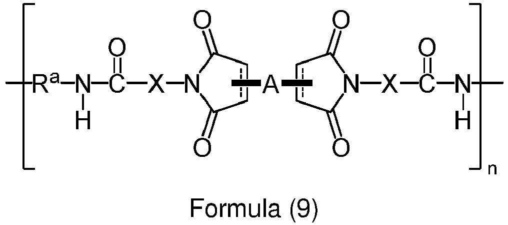 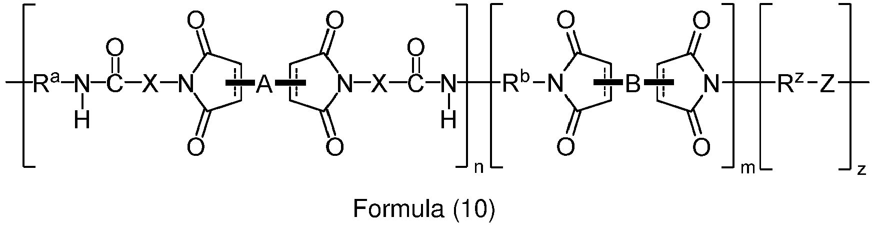 wherein 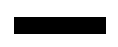 represents one single bond or two single bonds;
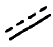 represents a single bond or double bond; and
A, B, Z, R^{a}, R^{b}, R^{z}, X, n, m and z have one of the definitions mentioned above for Formulae (1), (2), (2a), (2b), (3a), (3b), (4a), (4b), (4aa), (4ab), (4ba) and (4bb) or related preferred, more preferred, particularly preferred or most preferred embodiments.

In a preferred embodiment, the dielectric polymer material further contains additional repeating units derived from the additional compounds being capable to react with the bismaleimide compounds as defined above. Moreover there is provided an electronic device comprising a dielectric polymer material according to the present invention. For the electronic device it is preferred that the polymer material forms a dielectric layer. The dielectric layer serves to electrically separate one or more electronic components being part of the electronic device from each other. Preferably, the electronic device is a microelectronic device and the dielectric polymer material is comprised as a repassivation material in a redistribution layer of the microelectronic device.

The present invention is further illustrated by the examples following hereinafter which shall in no way be construed as limiting.

### Examples

### A Synthesis of Building Blocks

### Synthesis of 2,2'-(1,3,5,7-tetraoxo-5,7-dihydropyrrolo[3,4-f]isoindole-2,6(1H,3H-diyl)diacetic acid (1)

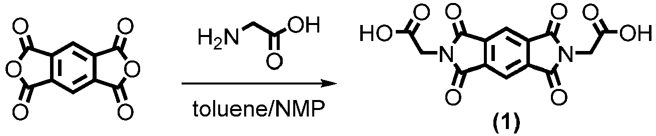

Pyromellitic dianhydride (PMDA, 15 g, 68.8 mmol) was dissolved in toluene/NMP (240 mL, 3 : 1, v/v) and glycine (12.9 g, 172 mmol) was added. The reaction mixture was refluxed for 16 h using a Dean-Stark apparatus and then cooled to room temperature while a solid precipitated, which was filtered and washed several times with toluene. The crude product was recrystallized from acetonitrile/water (5 : 1, v/v) and vacuum dried at 40°C for 12 h to give a white solid (15.2 g, 66.7 %).

**Analytics:** ¹H NMR (500 MHz, THF-*d*₈): δ = 11.72 (broad s, 2H), 8.35 (s, 4H), 4.43 (s, 4H) ppm.

### Synthesis of 4,4'-((1s,3s,5r,7r)-adamantane-1,3-diyl)diphenol (2)

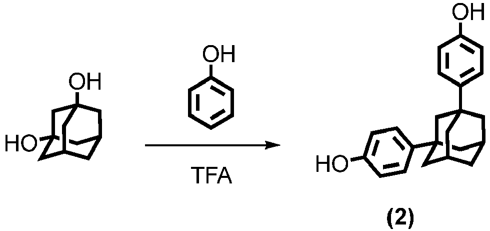

Phenol (105 g, 1.1 mol) was dissolved in TFA (340 mL) and heated. 1,3-Adamantanediol (89 g, 0.53 mol), dissolved in 170 mL TFA, was then added dropwise over 2.5 h. The reaction mixture was refluxed for 16 h, cooled to room temperature and carefully quenched with water (600 mL). The resulting suspension was stirred at 40°C for 2 h, the solid was filtered, washed twice with water (each 500 mL) and dried under vacuum at room temperature. The crude product was finally recrystallized from acetonitrile/water (6 : 1, v/v), filtered and vacuum dried to give a white solid (134 g, 77%).

**Analytics:** ¹H NMR (500 MHz, DMSO-*d*₆): δ = 9.07 (broad s, 2H), 7.20 - 7.14 (m, 4H), 6.71 - 6.65 (m, 4H), 2.23 - 2.17 (m, 2H), 1.86 - 1.76 (m, 10 H), 1.70 (d, *J* = 3.2 Hz, 2H) ppm.

### Synthesis of ((1s,3s,5r,7r)-adamantane-1,3-diyl)bis(4,1-phenylene) bis(1 ,3-dioxo-1,3-dihydroisobenzofuran-5-carboxylate) (3)

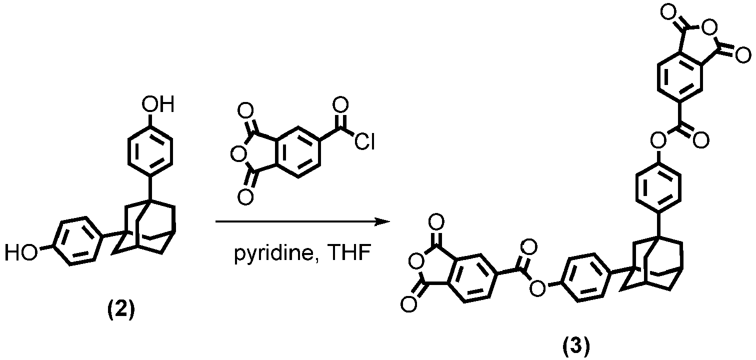

Diphenol (**2**) (56 g, 171 mmol) was dissolved in THF (450 mL) and pyridine (41.5 mL, 0.51 mol). Trimellitic anhydride chloride (84.6 g, 394 mmol), dissolved in 300 mL THF, was added dropwise and subsequently refluxed for 16 h. The reaction mixture was then cooled to room temperature, treated with acetonitrile (800 mL) and stirred at room temperature for 30 minutes. The solid was filtered, suspended with acetonitrile (1.2 L) and stirred at 80°C for 4 h to give a white solid after filtration and vacuum drying. (92.5 g, 80 %).

**Analytics:** ¹H NMR (500 MHz, THF-*d*₈): δ = 8.73 (t, *J* = 1.0 Hz, 2H), 8.70 (dd, *J* = 7.8, 1.4 Hz, 2H), 8.21 (d, *J* = 7.9 Hz, 2H), 7.57 - 7.50 (m, 4H), 7.30 - 7.22 (m, 4H), 2.34 (q, *J* = 3.2 Hz, 2H), 2.13 (s, 2H), 2.04 (d, *J* = 3.0 Hz, 8H), 1.86 (d, *J* = 3.1 Hz, 2H) ppm.

### Synthesis of 2,2'-((((((1s,3s,5r,7r)-adamantane-1,3-diyl)bis(4,1-phenylene)) bis(oxy))bis(carbonyl))bis(1,3-dioxoisoindoline-5,2-diyl))diacetic acid (4)

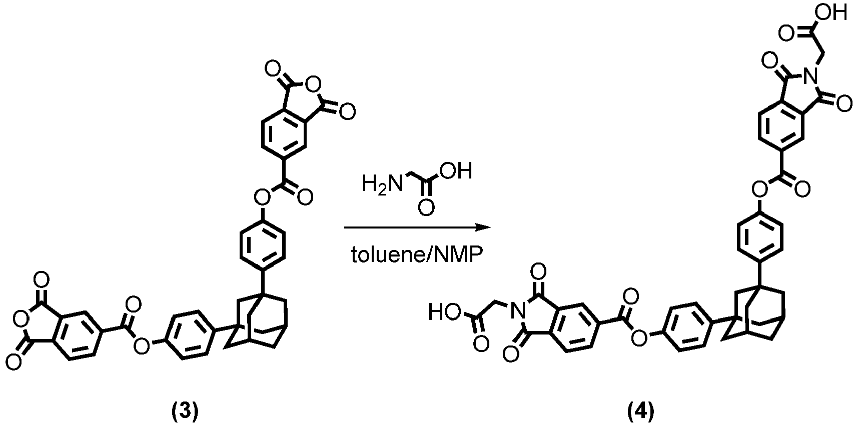

Dianhydride (3) (29.4 g, 44 mmol) and glycine (8.3 g, 110 mmol) were together dissolved in toluene/NMP (155 mL, 3 : 1, v/v). The reaction mixture was refluxed for 16 h using a Dean-Stark apparatus and then cooled to room temperature while a solid precipitated which was filtered and washed several times with toluene. The crude product was treated with water and stirred at 40°C for 4 h, filtered, recrystallized from acetonitrile/THF (5:1, v/v) and vacuum dried at 40°C for 12 h to give a wh ite solid (13.4 g, 38.4 %).

**Analytics:** ¹H NMR (500 MHz, DMSO-*d*₆): δ = 13.38 (broad s, 2H), 8.58 (dd, *J* = 7.8, 1.5 Hz, 2H), 8.50 - 8.46 (m, 2H), 8.15 (dd, *J* = 7.8, 0.7 Hz, 2H), 7.60 - 7.54 (m, 4H), 7.34 - 7.28 (m, 4H), 4.38 (s, 4H), 2.30 (p, *J* = 3.2 Hz, 2H), 2.05 (s, 2H), 2.01 - 1.89 (m, 8H), 1.79 (s, 2H) ppm.

### Synthesis of (9H-fluorene-9,9-diyl)bis(4, 1-phenylene) bis(1,3-dioxo-1,3-dihydroisobenzofuran-5-carboxylate) (5)

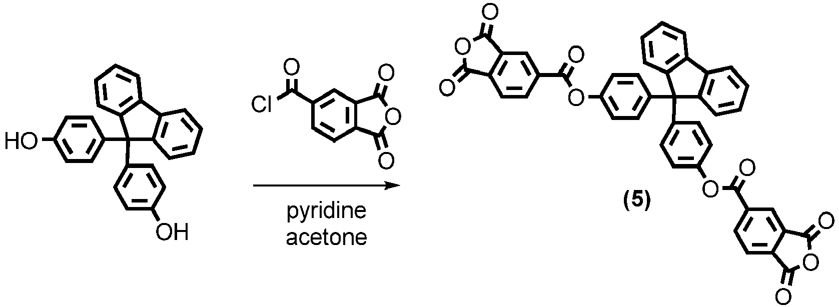

4,4'-(9*H-*fluorene-9,9-diyl)diphenol (14.8 g, 40 mmol) and trimellitic anhydride (TMAC, 18.9 g, 88 mmol) was reacted in anhydrous acetone (100 mL) in the presence of pyridine (9.5 g, 120 mmol). After the reaction, the solvent was removed, the pale-yellow solid obtained was washed with toluene and subsequently water, and dried at 200°C for 12 h under vacuum. The crude product was recrystallized from a mixed solvent (toluene/acetic anhydride, 25/2, v/v), and vacuum-dried at 200°C for 12 h (14.5 g, 52 %).

**Analytics:** ¹H NMR (500 MHz, THF-*d*₈): δ = 8.74 (s, 2H), 8.71 (dd, *J* = 7.9, 1.4 Hz, 2H), 8.23 (d, *J* = 7.9 Hz, 2H), 7.90 (d, *J* = 7.5 Hz, 2H), 7.56 (d, *J=* 7.6 Hz, 2H), 7.43 (td, *J* = 7.5, 1.0 Hz, 2H), 7.40 - 7.32 (m, 6H), 7.27 - 7.22 (m, 4H) ppm.

### Synthesis of 2,2'-(((((9H-fluorene-9,9-diyl)bis(4,1-phenylene))bis(oxy)) bis(carbonyl))bis(1,3-dioxoisoindoline-5,2-diyl))diacetic acid (6)

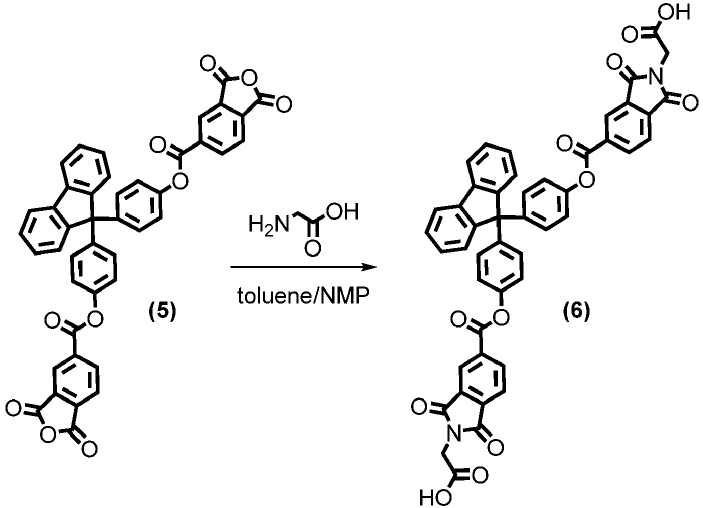

Dianhydride (**5**) (31 g, 44 mmol) and glycine (8.3 g, 110 mmol) were together dissolved in toluene/NMP (155 mL, 3:1, v/v). The reaction mixture was refluxed for 16 h using a Dean-Stark apparatus and then cooled to room temperature while a solid precipitated which was filtered and washed several times with toluene. The crude product was treated with water and stirred at 40°C for 4 h, filtered, recrystallized from acetonitrile/THF (5:1, v/v) and vacuum dried at 40°C for 12 h to give a wh ite solid (22.1 g, 61 %).

**Analytics:** ¹H NMR (700 MHz, CDCl₃): δ = 8.65 (dt, *J* = 5.2, 1.0 Hz, 2H), 8.55 (ddd, *J* = 6.2, 4.8, 1.5 Hz, 2H), 8.03 - 7.99 (m, 2H), 7.81 - 7.74 (m, 2H), 7.44 - 7.34 (m, 4H), 7.34 - 7.25 (m, 6H), 7.14 - 7.05 (m, 4H), 4.52 (s, 4H) ppm.

### B Synthesis of Oligomers

### Synthesis of Oligomer (7)

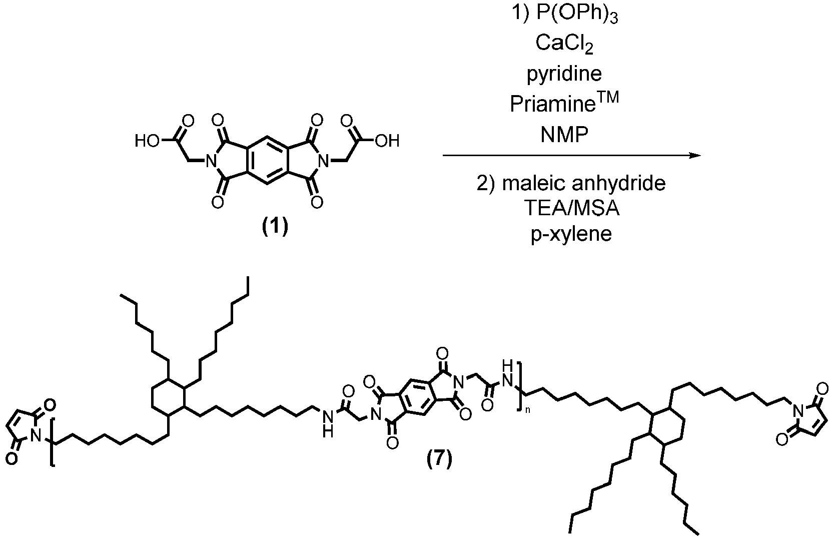

Diacid (1) (6.6 g, 20 mmol) was dissolved together with CaCl₂ (4.9 g, 44 mmol), pyridine (12.7 g, 160 mmol) and triphenyl phosphite (15.5 g, 50 mmol) in NMP (50 mL). Priamine^{™} (21.4 g, 40 mmol) was added and the reaction mixture was stirred at 120°C for 3 h, cool ed to room temperature and precipitated by adding 500 mL of ethanol. The solid was washed several times with ethanol, hot water and again ethanol and vacuum dried. The intermediate was suspended in *p*-xylene (40 mL), carefully mixed with methanesulfonic acid (13.9 g, 144 mmol), triethylamine (14.2 g, 140 mmol) and maleic anhydride (4.9 g, 50 mmol) and refluxed for 5 h using a Dean-Stark apparatus. After cooling to room temperature the product was precipitated by the addition of ethanol (500 mL). The brown resin was received after vacuum drying (16 g, 57 %).

**Analytics:** GPC: Mₙ: 5.6 kDa, M_{w}: 9.9 kDa, PDI: 1.77. ¹H NMR (500 MHz, THF-*d*₈): δ = 10.57 (s), 8.69 (s), 8.26 (d, *J* = 13.6 Hz), 6.76 (s), 4.28 (s), 3.68 (d, *J* = 7.0 Hz), 3.65 - 3.59 (m), 3.44 (t, *J* = 7.2 Hz), 3.14 (dt, *J* = 14.8, 7.8 Hz), 1.81 - 1.75 (m), 1.29 (s), 0.88 (q, *J* = 9.7, 7.9 Hz) ppm.

### Synthesis of Oligomer (8)

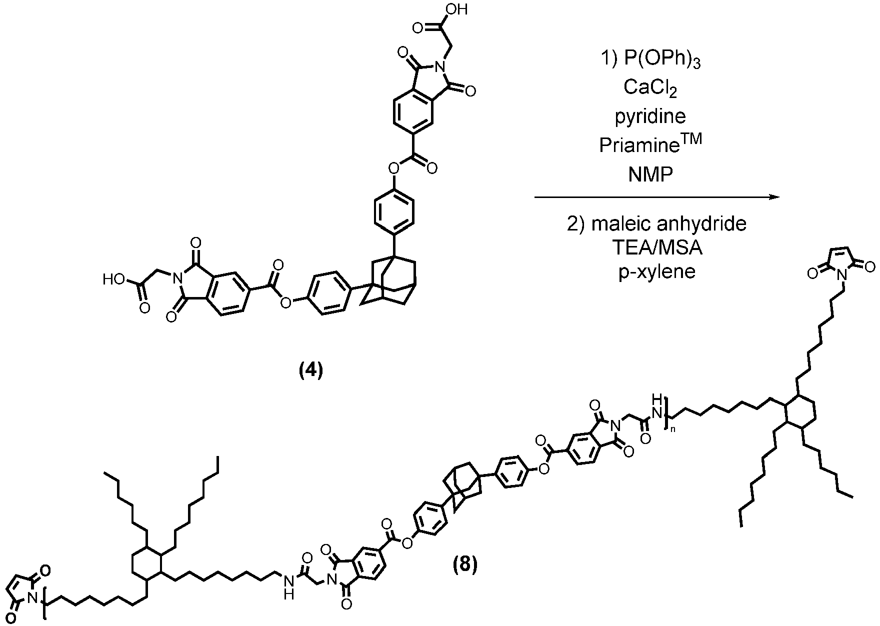

Diacid (**4**) (3.9 g, 5 mmol) was dissolved together with CaCl₂ (1.2 g, 11 mmol), pyridine (3.2 g, 11 mmol) and triphenyl phosphite (3.9 g, 12.5 mmol) in NMP (20 mL). Priamine^{™} (5.4 g, 10 mmol) was added and the reaction mixture was stirred at 120°C for 3 h, cooled to roo m temperature and precipitated by adding 100 mL of ethanol. The solid was washed several times with ethanol, hot water and again ethanol and vacuum dried. The intermediate was suspended in *p*-xylene (20 mL), carefully mixed with methanesulfonic acid (3.5 g, 36 mmol), triethylamine (3.5 g, 35 mmol) and maleic anhydride (1.2 g, 12.5 mmol) and refluxed for 5 h using a Dean-Stark apparatus. After cooling to room temperature the product was precipitated by the addition of ethanol (100 mL). The brown resin was received after vacuum drying (6.5 g, 67 %).

**Analytics:** GPC: Mₙ: 7.6 kDa, M_{w}: 13.2 kDa, PDI: 1.75. ¹H NMR (700 MHz, THF-*d*₈): δ = 10.52 (s), 8.55 (t, *J* = 6.2 Hz), 8.01 (dd, *J* = 8.0, 4.5 Hz), 7.52 (d, *J* = 8.2 Hz), 7.48 - 7.38 (m), 7.25 (d, *J* = 8.2 Hz), 6.75 (s), 4.36 - 4.23 (m), 3.44 (t, *J* = 7.2 Hz), 3.24 - 3.03 (m), 2.43 - 2.29 (m), 2.12 (s), 2.02 (s), 1.85 (s), 1.57 - 1.08 (m), 0.97 - 0.67 (m) ppm.

### Synthesis of Oligomer (9)

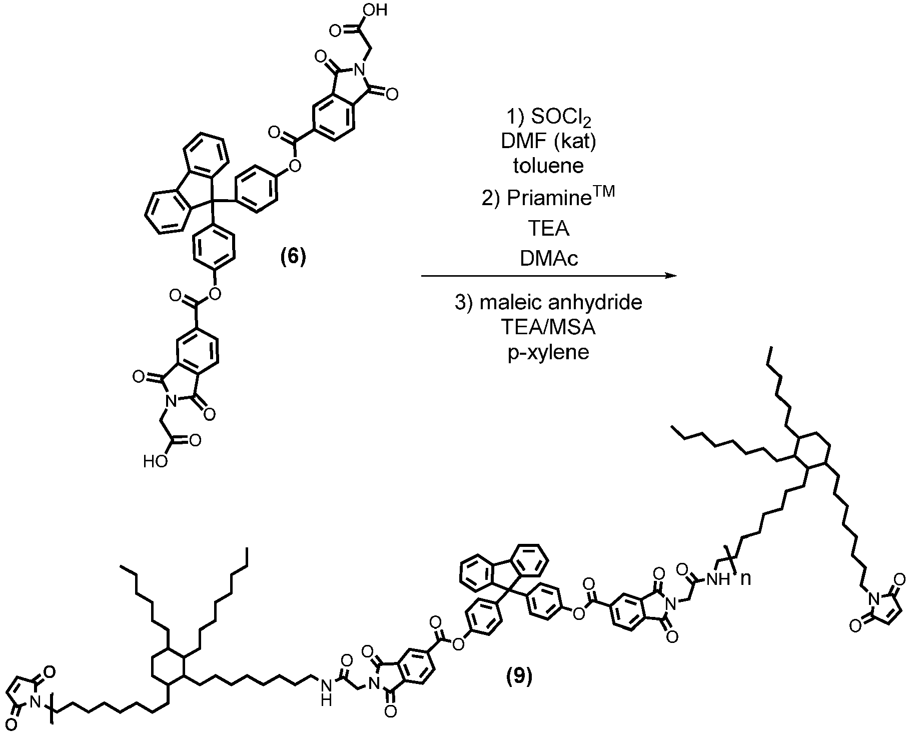

Diacid (**6**) (7.0 g, 7.5 mmol) was dissolved/suspended in 20 mL toluene, 0.1 mL of dry DMF was added, the mixture was then dropwise treated with thionyl chloride (2.2 mL, 30 mmol) and heated at 100°C for 3 h. The solvent was removed after cooling to room temperature and the crude product was dissolved in dry DMAc (50 mL) without further work-up. Triethylamine (2.3 g, 23 mmol) and Priamine^{™} (8.2 g, 15.3 mmol) were added at 0°C. The reaction mixture was then stirred at room temperature for 16 h and precipitated by adding 300 mL of ethanol. The resin was dissolved in *p-*xylene, treated with methanesulfonic acid (5.3 g, 55 mmol), triethylamine (5.4 g, 54 mmol) and maleic anhydride (1.5 g, 15 mmol), and refluxed for 5 h using a Dean-Stark apparatus. After cooling to room temperature the product was precipitated by the addition of ethanol (300 mL). The brown resin was obtained after vacuum drying (6.5 g, 45 %).

**Analytics:** GPC: Mₙ: 3.5 kDa, M_{w}: 6.1 kDa, PDI: 1.74. ¹H NMR (500 MHz, THF-*d*₈) δ = 10.50 (s), 8.53 (t, *J* = 6.8 Hz), 7.99 (tt, *J* = 7.9, 5.1, 4.2 Hz), 7.85 (d, *J* = 7.7 Hz), 7.80 (d, *J* = 7.6 Hz), 7.52 (d, *J* = 7.6 Hz), 7.43 (d, *J* = 7.5 Hz), 7.38 - 7.24 (m), 7.19 (d, *J* = 8.4 Hz), 6.91 (s), 4.24 (d, *J* = 9.4 Hz), 3.67 (t, *J* = 7.2 Hz), 3.44 (td, *J* = 7.2, 3.0 Hz), 1.66 - 1.50 (m), 1.36 - 1.32 (m), 0.88 - 0.81 (m) ppm.

### Synthesis of Oligomer (10)

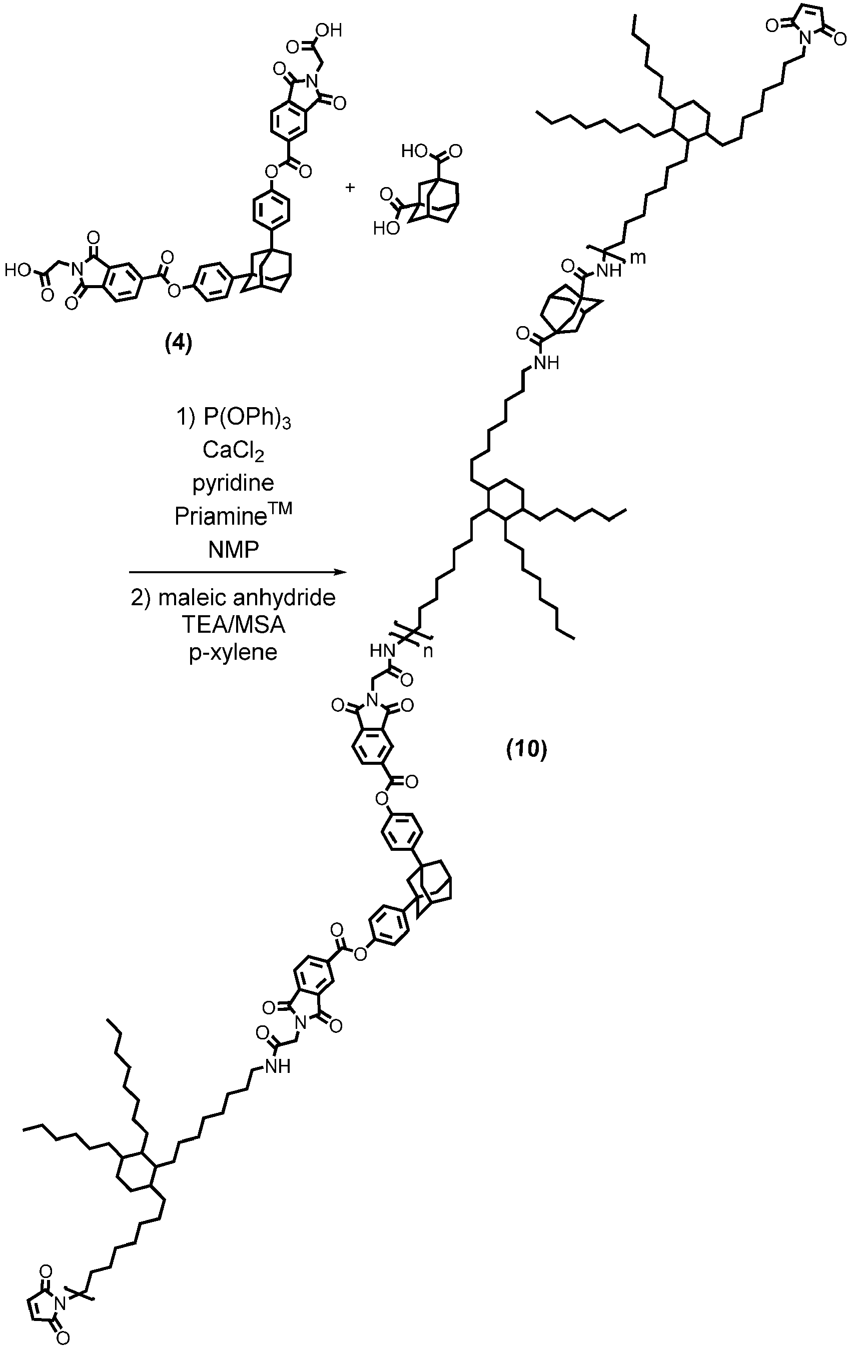

Diacid (**4**) (3.9 g, 5 mmol) and adamantane-1,3-dicarboxylic acid (Accela, 1.1 g, 5 mmol) were dissolved together with CaCl₂ (2.4 g, 22 mmol), pyridine (6.4 g, 22 mmol) and triphenyl phosphite (7.8 g, 25 mmol) in NMP (40 mL). Priamine^{™} (10.7 g, 20 mmol) was added and the reaction mixture was stirred at 120°C for 3 h, cooled to room temperature and precipitated by adding 300 mL of ethanol. The solid was washed several times with ethanol, hot water and again ethanol and vacuum dried. The intermediate was suspended in *p*-xylene (50 mL), carefully mixed with methanesulfonic acid (7 g, 72 mmol), triethylamine (7 g, 70 mmol) and maleic anhydride (2.4 g, 25 mmol) and refluxed for 5 h using a Dean-Stark apparatus. After cooling to room temperature the product was precipitated by the addition of ethanol (300 mL). The brown resin was received after vacuum drying (7.3 g, 48 %).

**Analytics:** GPC: Mₙ: 4.3 kDa, M_{w}: 7.1 kDa, PDI: 1.66. ¹H NMR (500 MHz, THF-*d*₈): δ 10.77 (s), 8.57 (d, *J* = 8.8 Hz), 8.34 - 8.16 (m), 8.02 (t, *J* = 5.9 Hz), 7.53 (d, *J* = 8.4 Hz), 7.44 - 7.32 (m), 7.25 (d, *J* = 8.5 Hz), 6.76 (s), 6.73 - 6.65 (m), 4.27 (s), 3.69 - 3.59 (m), 3.44 (t, *J* = 7.2 Hz), 3.14 (dq, *J* = 13.5, 7.3 Hz), 2.33 (s), 2.05 (q, *J* = 23.1 Hz), 1.78 (td, *J* = 6.5, 3.2 Hz), 1.30 (d, *J* = 11.4 Hz), 0.88 (q, *J* = 9.7, 8.0 Hz).

### C Mechanical Testing

### Dynamic Mechanical Analysis

Free standing films were prepared as follows: Concentrated solution of the oligomer mixed with photoinitiator and structural additive is slit coated on a glass substrate. The resulted film is firstly dried at room temperature and then at 100°C for 30 min on a hot plate. The film i s cured via broadband UV exposure (UVACUBE 2000, Hönle, mercury lamp; dose: 10 J/cm²) and finally removed from the substrate after soaking with water. The free standing film is dried at air for 20 h. Dynamic mechanical analysis (DMA) was performed on a Netzsch DMA 242 E instrument in air with a heating rate of 3 K/min.

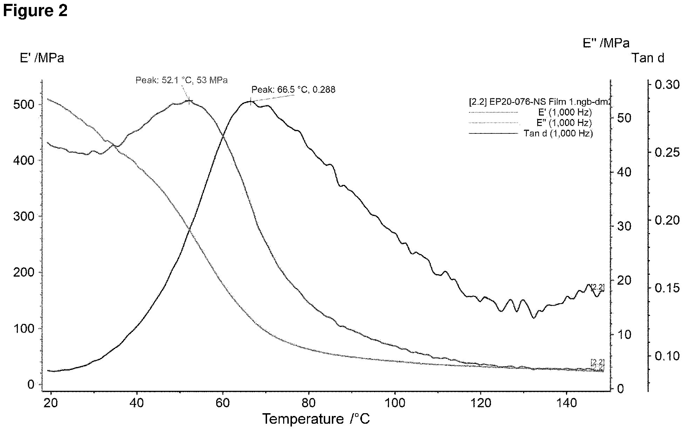

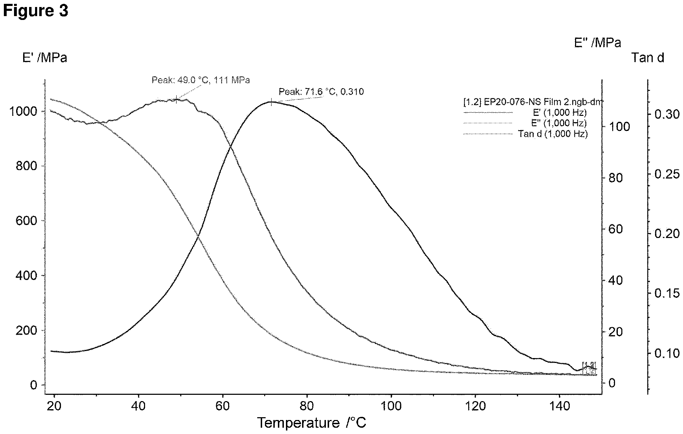

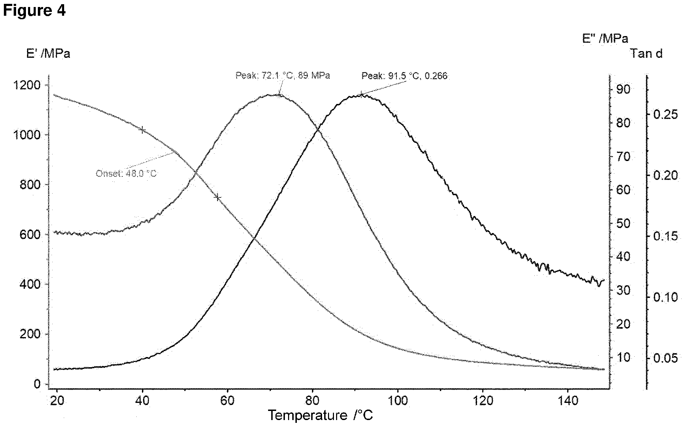

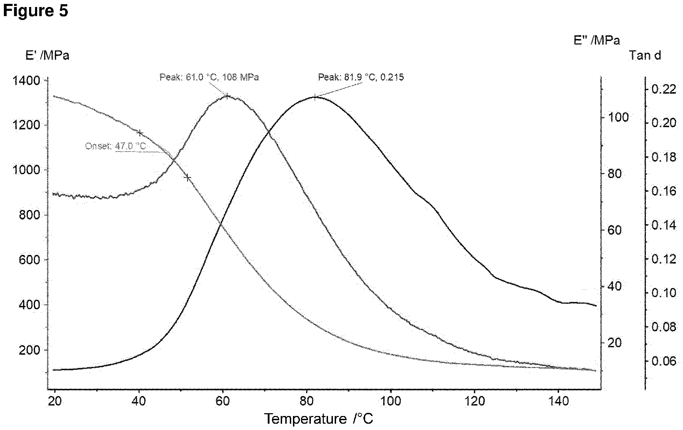

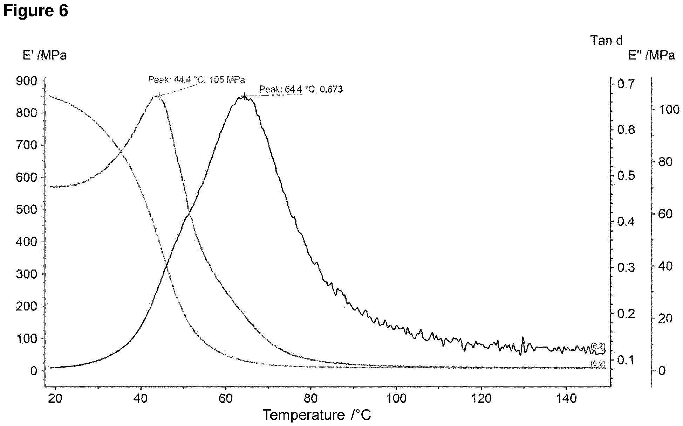

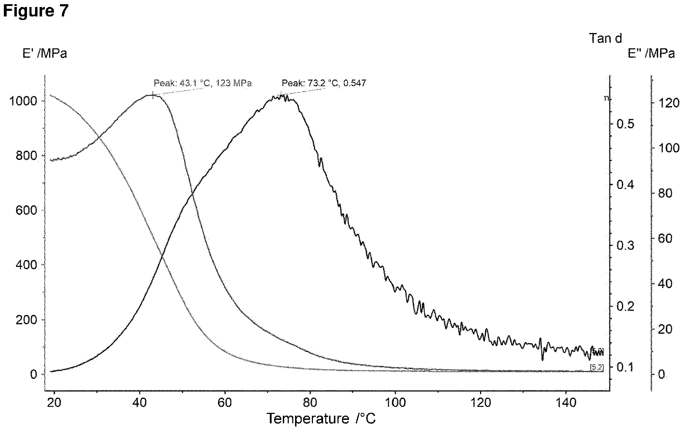

Results DMA:
(1) Oligomer (**7**) is cured together with 5 wt.-% Irgacure OXE-02. See Figure 2: T_{g} (tan *δ*): 66.5°C.
(2) Oligomer (**7**) is cured together with 10 wt.-% bis(3-ethyl-5-methyl-4-maleimidophenyl)methane (CAS RN: 105391-33-1, TCI) as structural additive and 5 phr Irgacure OXE-02. See Figure 3: T_{g} (tan *δ*): 71.6°C.
(3) Oligomer (**8**) is cured together with 5 wt.-% Irgacure OXE-02. See Figure 4: T_{g} (tan *δ*): 91.5°C.
(4) Oligomer (**8**) is cured together with 25 wt.-% tetra(ethylene glycol) diacrylate (CAS RN: 17831-71-9, Merck Sigma-Aldrich) as structural additive and 5 phr Irgacure OXE-02. See Figure 5: T_{g} (tan *δ*): 81.9°C.
(5) Oligomer (**10**) is cured together with 5 wt.-% Irgacure OXE-02. See Figure 6: T_{g} (tan *δ*): 64.4°C.
(6) Oligomer (**10**) is cured together with 10 wt.-% bis(3-ethyl-5-methyl-4-maleimidophenyl)methane (CAS RN: 105391-33-1, TCI) as structural additive and 5 phr Irgacure OXE-02. See Figure 7: T_{g} (tan *δ*): 73.2°C.

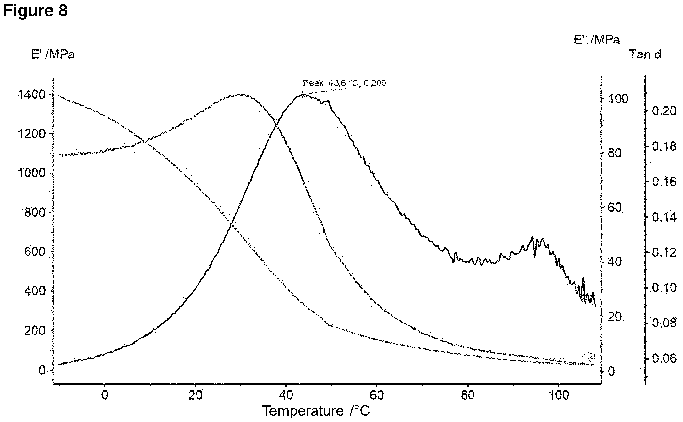

Reference material BMI3000 (commercial grade, Designer Molecules Inc.) (7) BMI3000 is cured together with 5 wt.-% Irgacure OXE-02. See Figure 8: T_{g} (tan *δ*): 43.5°C.

### Young's Modulus and Elongation at Break

Young's modulus and elongation at break were measured on a mechanical testing machine (500 N Zwicki) using following parameter: premeasurement: 0.1 N at an extension rate of 10 mm/min; main extension rate of 50 mm/min. All experiments were conducted at room temperature using free-standing films prepared with the method described above. Film dimensions were 25 mm long, 15 mm wide with a typical film thickness of 40 - 60 µm.

### Results:

**Table 1: Elongation at Break (E2B) and Young's modulus (YM) of free-standing films.**

| **Material** | **E2B [%]** | **YM [GPa]** |
|---|---|---|
| BMI3000cg | 69 | 0.43 |
| +10 wt.-% CAS: 105391-33-1 | 45 | 0.67 |
| Oligomer (**7**) | 20 | 0.81 |
| +10 wt.-% CAS: 105391-33-1 | 8 | 1.11 |
| Oligomer (**8**) | 3 | 1.47 |
| +25 wt.-% CAS: 17831-71-9 | 5 | 1.54 |
| Oligomer (**10**) | 11 | 0.92 |
| +10 wt.-% CAS: 105391-33-1 | 13 | 0.96 |

### D Conclusion

Surprisingly, the introduction of an additional amide bond next to the imide functional group that generates the amide-imide motif led to materials with improved thermomechanical properties compared to prior art bismaleimide resins such as BMI3000.

The glass transition temperature of these materials increases by more than 20°C compared to classic bismaleimide resins of the same type.

As an additional unexpected effect, polymer networks formed with Oligomer (**7**) are characterized by almost twice as high modulus numbers compared to polymer films produced with BMI3000.

## Claims

1. Bismaleimide compound, represented by Formula (1) or (2): 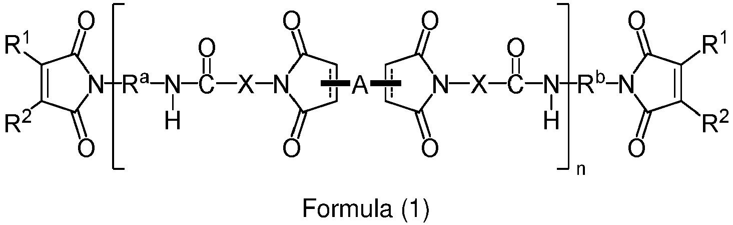 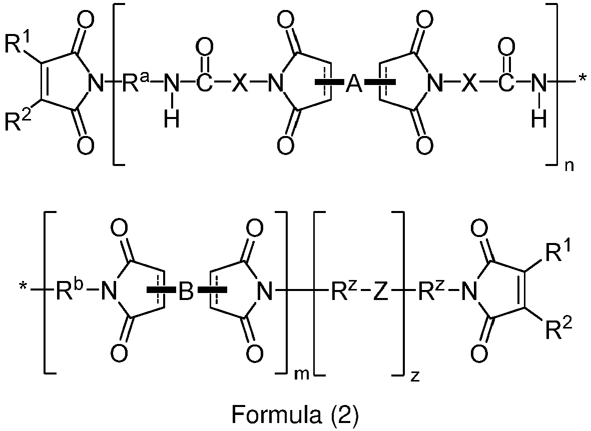 wherein:
A, B and Z are independently and at each occurrence independently from each other a binding unit comprising one or more of an aliphatic, aromatic, or siloxane moiety, wherein optionally one or more of A, B and Z contains a cardo center or spiro center;
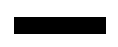 represents one single bond or two single bonds;
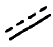 represents a single bond or double bond;
R^{a} and R^{b} are independently and at each occurrence independently from each other a binding unit comprising one or more of an aliphatic, aromatic, or siloxane moiety;
R^{z} is R^{a} or R^{b};
X is at each occurrence independently from each other a binding unit comprising one or more of an aliphatic, aromatic, or siloxane moiety;
R¹ is H or alkyl having 1 to 5 carbon atoms;
R² is H or alkyl having 1 to 5 carbon atoms;
n is an integer from 1 to 60;
m is an integer from 0 to 60; and
z is an integer from 0 to 60;
wherein at least one of m or z is ≠ 0.

2. Bismaleimide compound according to claim 1, wherein:
A, B and Z are independently and at each occurrence independently from each other a substituted or unsubstituted aliphatic moiety having 2 to 100 carbon atoms, a substituted or unsubstituted hydrocarbon aromatic moiety having 6 to 100 carbon atoms, a substituted or unsubstituted heteroaromatic moiety having 4 to 100 carbon atoms, a substituted or unsubstituted siloxane moiety having 2 to 50 silicon atoms, or a combination thereof, wherein optionally one or more of A, B and Z contains a cardo center or spiro center.

3. Bismaleimide compound according to claim 1 or 2, wherein:
R^{a} and R^{b} are independently and at each occurrence independently from each other a substituted or unsubstituted aliphatic moiety having 2 to 100 carbon atoms, a substituted or unsubstituted hydrocarbon aromatic moiety having 6 to 100 carbon atoms, a substituted or unsubstituted heteroaromatic moiety having 4 to 100 carbon atoms, a substituted or unsubstituted siloxane moiety having 2 to 50 silicon atoms, or a combination thereof; and
R^{z} is R^{a} or R^{b}.

4. Bismaleimide compound according to one or more of claims 1 to 3, wherein: X is at each occurrence independently from each other a substituted or unsubstituted aliphatic moiety having 2 to 100 carbon atoms, a substituted or unsubstituted hydrocarbon aromatic moiety having 6 to 100 carbon atoms, a substituted or unsubstituted heteroaromatic moiety having 4 to 100 carbon atoms, a substituted or unsubstituted siloxane moiety having 2 to 50 silicon atoms, or a combination thereof.

5. Bismaleimide compound according to claim 1, wherein the bismaleimide compound according to Formula (1) is represented by Formula (3a) or (3b) and the bismaleimide compound according to Formula (2) is represented by Formula (4a) or (4b): 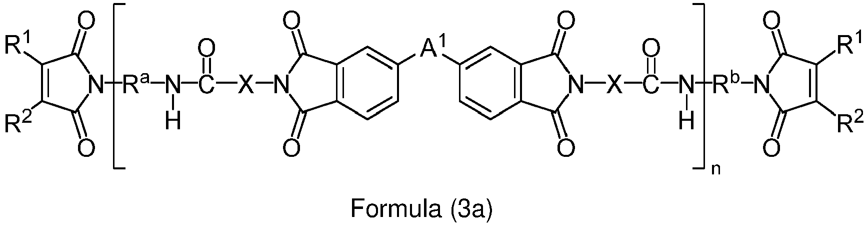 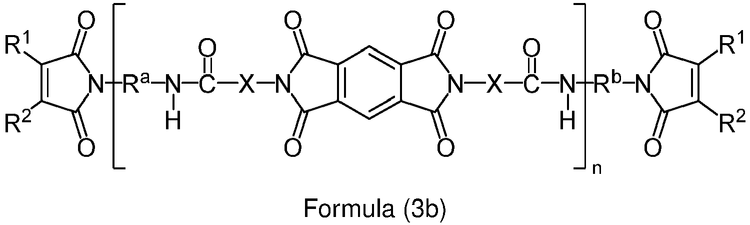 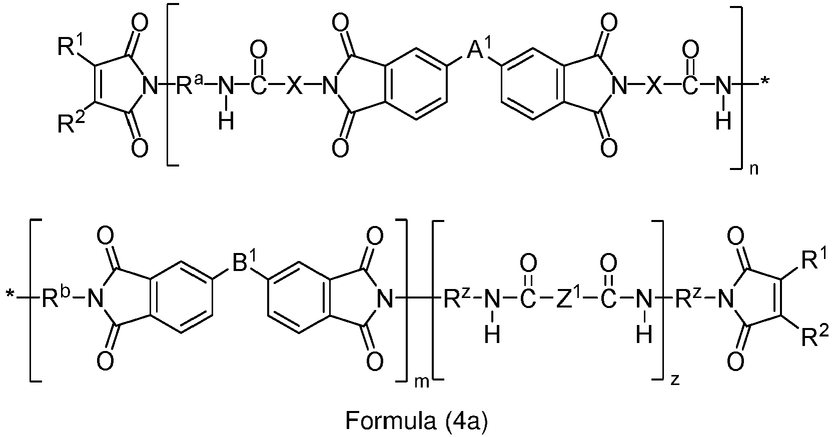 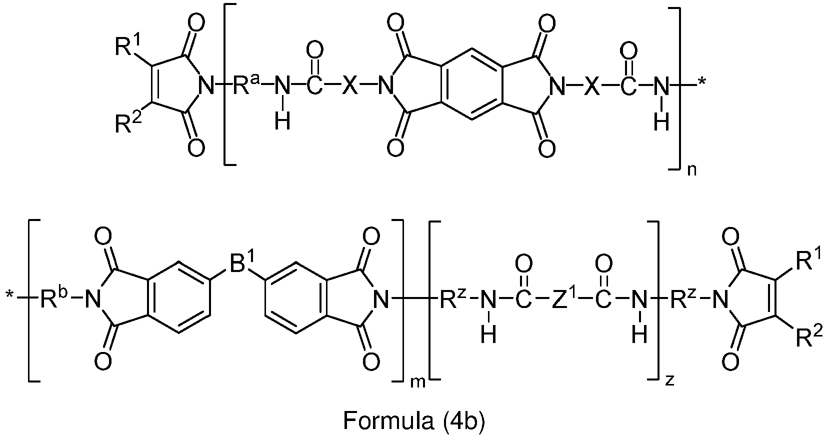 wherein:
A¹, B¹ and Z¹ are independently and at each occurrence independently from each other a binding unit comprising one or more of an aliphatic, aromatic, or siloxane moiety, wherein optionally one or more of A¹, B¹ and Z¹ contains a cardo center or spiro center;
R^{a} and R^{b} are independently and at each occurrence independently from each other a substituted or unsubstituted aliphatic moiety having 2 to 100 carbon atoms, a substituted or unsubstituted hydrocarbon aromatic moiety having 6 to 100 carbon atoms, a substituted or unsubstituted heteroaromatic moiety having 4 to 100 carbon atoms, a substituted or unsubstituted siloxane moiety having 2 to 50 silicon atoms, or a combination thereof;
R^{z} is R^{a} or R^{b};
X is at each occurrence independently from each other a substituted or unsubstituted aliphatic moiety having 2 to 100 carbon atoms, a substituted or unsubstituted hydrocarbon aromatic moiety having 6 to 100 carbon atoms, a substituted or unsubstituted heteroaromatic moiety having 4 to 100 carbon atoms, a substituted or unsubstituted siloxane moiety having 2 to 50 silicon atoms, or a combination thereof; and
R¹, R², n, m and z are defined as in claim 1.

6. Bismaleimide compound according to claim 5, wherein:
A¹, B¹ and Z¹ are independently and at each occurrence independently from each other a substituted or unsubstituted aliphatic moiety having 2 to 80 carbon atoms, a substituted or unsubstituted hydrocarbon aromatic moiety having 6 to 80 carbon atoms, a substituted or unsubstituted heteroaromatic moiety having 4 to 80 carbon atoms, a substituted or unsubstituted siloxane moiety having 2 to 50 silicon atoms, or a combination thereof, wherein optionally one or more of A¹, B¹ and Z¹ contains a cardo center or spiro center.

7. Bismaleimide compound according to claim 5 or 6, wherein:
A¹, B¹ and Z¹ are independently and at each occurrence independently from each other represented by Formula (5):
-G²¹-(A²¹-G²²)ₖ-A²²-(G²³-A²³)ₗ-G²⁴- Formula (5)
wherein:
A²¹, A²² and A²³ are independently and at each occurrence independently from each other a divalent aromatic group, divalent aliphatic group or divalent mixed aromatic aliphatic group, which may contain one or more heteroatoms selected from N, O and S and which may be substituted with one or more substituents selected from the list consisting of halogen, alkyl having 1 to 10 carbon atoms, alkoxy having 1 to 10 carbon atoms, aryl having 6 to 10 carbon atoms and aryloxy having 6 to 10 carbon atoms, wherein one or more of A²¹, A²² and A²³ optionally contains a cardo center or spiro center;
G²¹, G²², G²³ and G²⁴ are independently and at each occurrence independently from each other -O-, -S-, -CO-, -(CO)-O-, -O-(CO)-, -S-(CO)-, -(CO)-S-, -O-(CO)-O-, -(CO)-NR⁰¹-, -NR⁰¹-(CO)-, -NR⁰¹-(CO)-NR⁰²-, -NR⁰¹-(CO)-O-, -O-(CO)-NR⁰¹-, -OCH₂-, -CH₂O-, -SCH₂-, -CH₂S-, -CF₂O-, -OCF₂-, -CF₂S-, -SCF₂-, -CH₂CH₂-, -(CH₂)₄-, -CF₂CH₂-, -CH₂CF₂-, -CF₂CF₂-, -CH=N-, -N=CH-, -N=N-, -CH=CR⁰¹-, -CY⁰¹=CY⁰²-, -C≡C-, -CH=CH-(CO)-O-, -O-(CO)-CH=CH-, or a single bond, wherein R⁰¹ and R⁰² are independently from each other H or alkyl having 1 to 5 carbon atoms;
Y⁰¹ and Y⁰² are independently from each other H, alkyl having 1 to 5 carbon atoms, phenyl, F, Cl, or CN; and
k and I are independently of each other 0, 1, 2, 3 or 4.

8. Bismaleimide compound according to claim 7, wherein:
A²¹, A²² and A²³ are independently and at each occurrence independently from each other represented by one of Formulae (6a) to (6u): 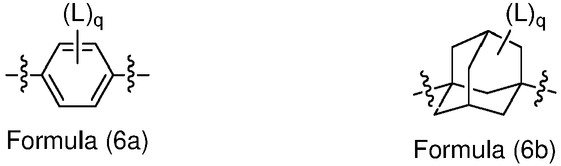 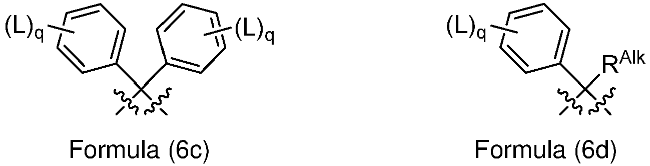 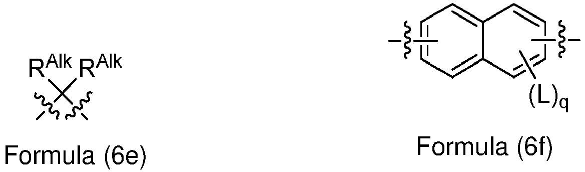 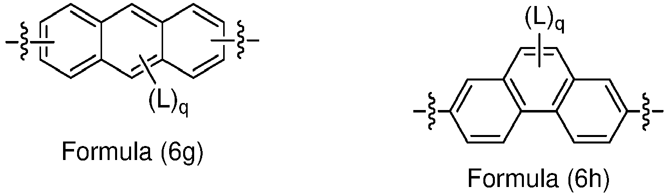 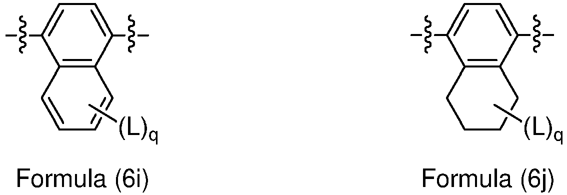 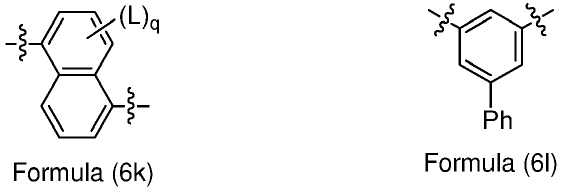 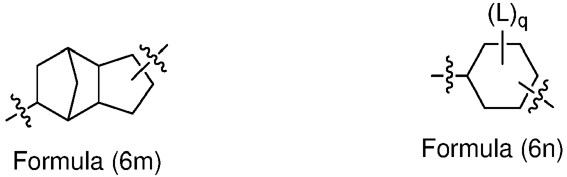 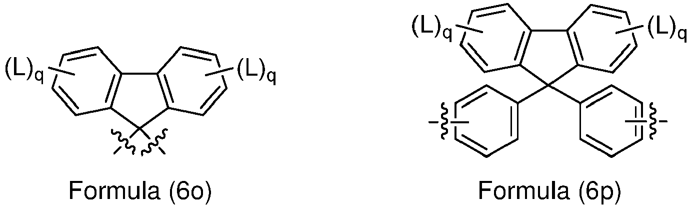 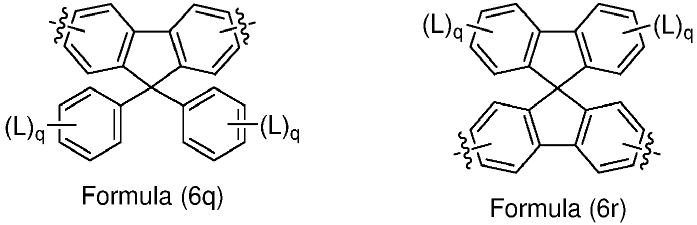 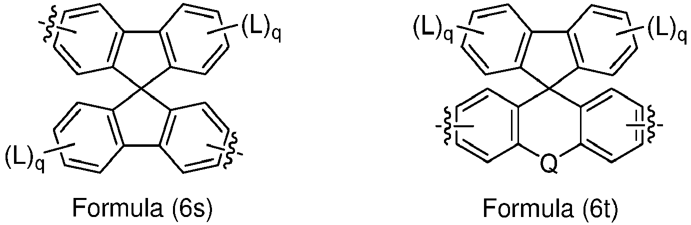 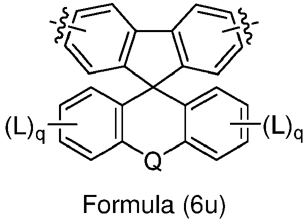
wherein 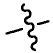 represents a binding site;
L is alkyl having 1 to 5 carbon atoms, halogenyl, Ph or CN;
R^{Alk} is alkyl having 1 to 5 carbon atoms;
Q is O, S or CH₂; and
q is an integer from 0 to 4.

9. Bismaleimide compound according to one or more of claims 1 to 8, wherein:
R^{a} and R^{b} are independently from each other a substituted or unsubstituted aliphatic moiety having 2 to 60 carbon atoms; and
R^{z} is R^{a} or R^{b}.

10. Bismaleimide compound according to one or more of claims 1 to 9, wherein:
R^{a} and R^{b} are independently and at each occurrence independently from each other represented by Formula (7a) or (7b): 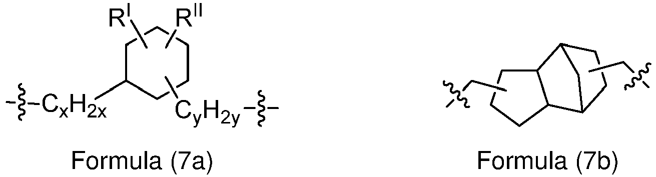
wherein 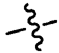 represents a binding site;
x and y are independently from each other an integer from 0 to 10;
R^{I} and R^{II} are independently from each other a linear alkyl group having 1 to 10 carbon atoms, or a branched alkyl group having 3 to 10 carbon atoms.

11. Bismaleimide compound according to one or more of claims 1 to 10, wherein:
R^{a} and R^{b} are independently and at each occurrence independently from each other represented by Formula (8a) or (8b): 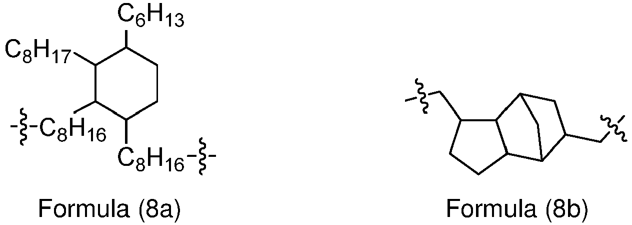
wherein 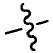 represents a binding site.

12. Bismaleimide compound according to one or more of claims 1 to 11, wherein:
X is a substituted or unsubstituted aliphatic moiety having 1 to 30 carbon atoms.

13. Method for forming a dielectric polymer material comprising the following steps:
(i) providing a formulation comprising one or more bismaleimide compound according to one or more of claims 1 to 12; and
(ii) curing said formulation.

14. Method for forming a dielectric polymer material according to claim 13, wherein the formulation further comprises one or more additional compound being capable to react with the bismaleimide compound.

15. Method for forming a dielectric polymer material according to claim 13 or 14, wherein the formulation comprises one or more inorganic or organic fillers.

16. Dielectric polymer material, obtainable by the method according any one of claims 13 to 15.

17. Dielectric polymer material comprising at least one repeating unit, which is derived from the bismaleimide compound as defined in any one of claims 1 to 12.

18. Dielectric polymer material according to claim 17, wherein the repeating unit comprises a structural unit represented by Formula (9) or (10): 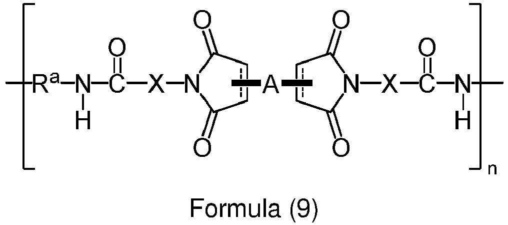 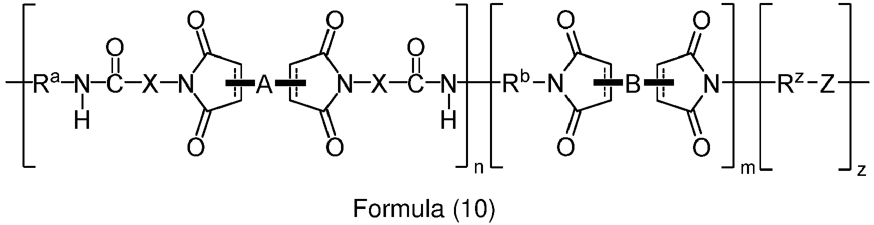 wherein 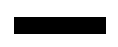 , 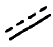 , A, B, Z, R^{a}, R^{b}, R^{z}, X, n, m and z are defined as in any one of claims 1 to 12.

19. Electronic device comprising a dielectric polymer material according to any one of claims 16 to 18.

20. Electronic device according to claim 19, wherein the electronic device is a microelectronic device and the dielectric polymer material is comprised as a repassivation material in a redistribution layer of the microelectronic device.

## Patentansprüche

1. Bismaleinimidverbindung, dargestellt durch Formel (1) oder Formel (2): 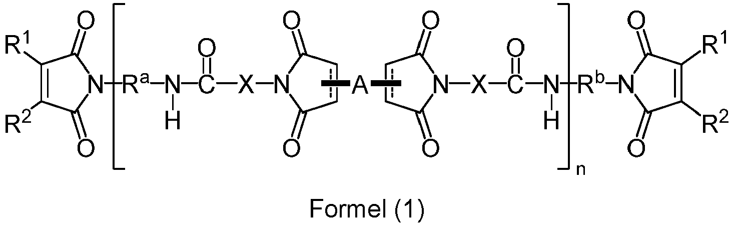 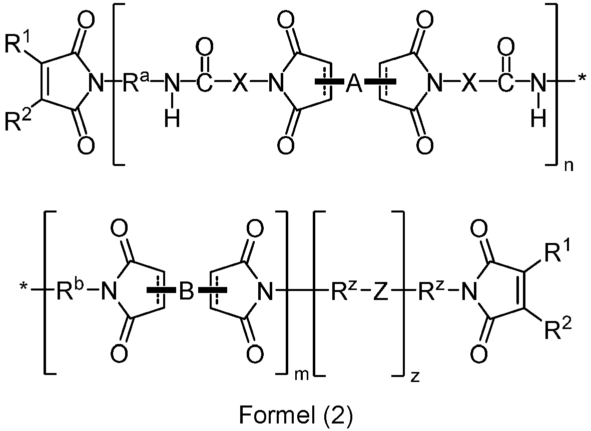 wobei:
A, B und Z unabhängig und bei jedem Auftreten unabhängig voneinander eine Bindungseinheit mit einem oder mehreren von einem aliphatischen, aromatischen oder Siloxan-Molekülteil sind, wobei gegebenenfalls einer oder mehrere von A, B und Z ein Cardo-Zentrum oder Spiro-Zentrum enthalten;
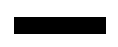 eine Einfachbindung oder zwei Einfachbindungen darstellt;
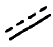 eine Einfachbindung oder Doppelbindung darstellt;
R^{a} und R^{b} unabhängig und bei jedem Auftreten unabhängig voneinander eine Bindungseinheit mit einem oder mehreren von einem aliphatischen, aromatischen oder Siloxan-Molekülteil sind;
R^{z} R^{a} oder R^{b} ist;
X bei jedem Auftreten unabhängig voneinander eine Bindungseinheit mit einem oder mehreren von einem aliphatischen, aromatischen oder Siloxan-Molekülteil ist;
R¹ H oder Alkyl mit 1 bis 5 Kohlenstoffatomen ist;
R² H oder Alkyl mit 1 bis 5 Kohlenstoffatomen ist;
n eine ganze Zahl von 1 bis 60 ist;
m eine ganze Zahl von 0 bis 60 ist; und
Z eine ganze Zahl von 0 bis 60 ist;
wobei mindestens einer von m oder z ≠ 0 ist.

2. Bismaleinimidverbindung nach Anspruch 1, wobei:
A, B und Z unabhängig und bei jedem Auftreten unabhängig voneinander ein substituierter oder unsubstituierter aliphatischer Molekülteil mit 2 bis 100 Kohlenstoffatomen, ein substituierter oder unsubstituierter aromatischer Kohlenwasserstoff-Molekülteil mit 6 bis 100 Kohlenstoffatomen, ein substituierter oder unsubstituierter heteroaromatischer Molekülteil mit 4 bis 100 Kohlenstoffatomen, ein substituierter oder unsubstituierter Siloxan-Molekülteil mit 2 bis 50 Siliciumatomen oder eine Kombination sind, wobei gegebenenfalls einer oder mehrere von A, B und Z ein Cardo-Zentrum oder Spiro-Zentrum enthalten.

3. Bismaleinimidverbindung nach Anspruch 1 oder 2, wobei:
R^{a} und R^{b} unabhängig und bei jedem Auftreten unabhängig voneinander ein substituierter oder unsubstituierter aliphatischer Molekülteil mit 2 bis 100 Kohlenstoffatomen, ein substituierter oder unsubstituierter aromatischer Kohlenwasserstoff-Molekülteil mit 6 bis 100 Kohlenstoffatomen, ein substituierter oder unsubstituierter heteroaromatischer Molekülteil mit 4 bis 100 Kohlenstoffatomen, ein substituierter oder unsubstituierter Siloxan-Molekülteil mit 2 bis 50 Siliciumatomen oder eine Kombination davon sind; und
R^{z} R^{a} oder R^{b} ist.

4. Bismaleinimidverbindung nach einem oder mehreren der Ansprüche 1 bis 3, wobei: X bei jedem Auftreten unabhängig voneinander ein substituierter oder unsubstituierter aliphatischer Molekülteil mit 2 bis 100 Kohlenstoffatomen, ein substituierter oder unsubstituierter aromatischer Kohlenwasserstoff-Molekülteil mit 6 bis 100 Kohlenstoffatomen, ein substituierter oder unsubstituierter heteroaromatischer Molekülteil mit 4 bis 100 Kohlenstoffatomen, ein substituierter oder unsubstituierter Siloxan-Molekülteil mit 2 bis 50 Siliciumatomen oder eine Kombination davon ist.

5. Bismaleinimidverbindung nach Anspruch 1, wobei die Bismaleinimidverbindung gemäß Formel (1) dargestellt wird durch Formel (3a) oder (3b) und die Bismaleinimidverbindung gemäß Formel (2) dargestellt wird durch Formel (4a) oder (4b): 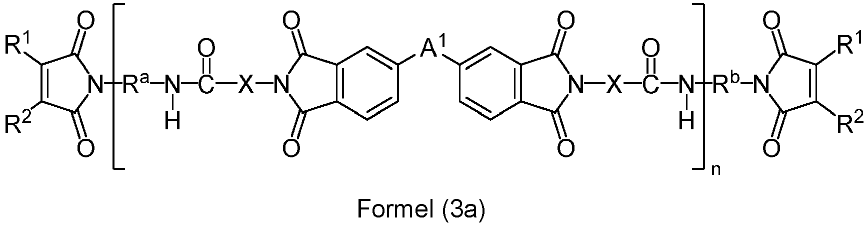 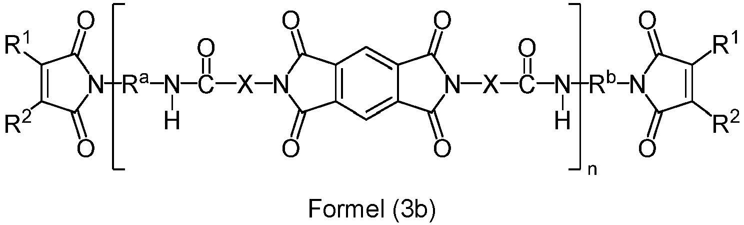 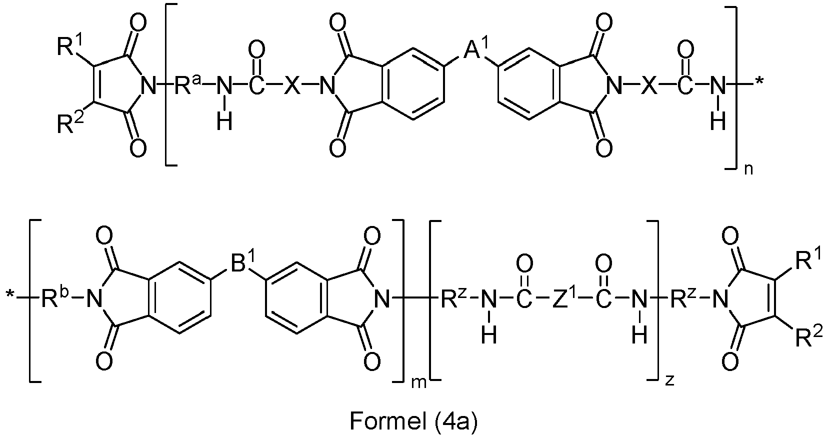 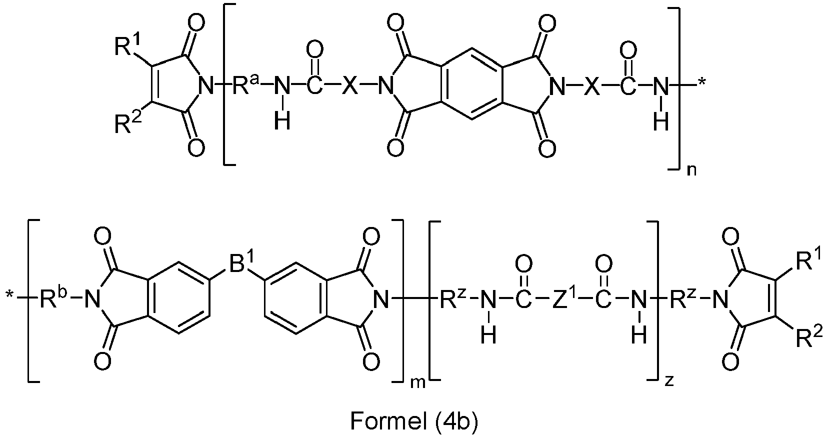 wobei:
A¹, B¹ und Z¹ unabhängig und bei jedem Auftreten unabhängig voneinander eine Bindungseinheit mit einem oder mehreren von einem aliphatischen, aromatischen oder Siloxan-Molekülteil sind, wobei gegebenenfalls einer oder mehrere von A¹, B¹ und Z¹ ein Cardo-Zentrum oder Spiro-Zentrum enthalten;
R^{a} und R^{b} unabhängig und bei jedem Auftreten unabhängig voneinander ein substituierter oder unsubstituierter aliphatischer Molekülteil mit 2 bis 100 Kohlenstoffatomen, ein substituierter oder unsubstituierter aromatischer Kohlenwasserstoff-Molekülteil mit 6 bis 100 Kohlenstoffatomen, ein substituierter oder unsubstituierter heteroaromatischer Molekülteil mit 4 bis 100 Kohlenstoffatomen, ein substituierter oder unsubstituierter Siloxan-Molekülteil mit 2 bis 50 Siliciumatomen oder eine Kombination davon sind;
R^{z} R^{a} oder R^{b} ist;
X bei jedem Auftreten unabhängig voneinander ein substituierter oder unsubstituierter aliphatischer Molekülteil mit 2 bis 100 Kohlenstoffatomen, ein substituierter oder unsubstituierter aromatischer Kohlenwasserstoff-Molekülteil mit 6 bis 100 Kohlenstoffatomen, ein substituierter oder unsubstituierter heteroaromatischer Molekülteil mit 4 bis 100 Kohlenstoffatomen, ein substituierter oder unsubstituierter Siloxan-Molekülteil mit 2 bis 50 Siliciumatomen oder eine Kombination davon ist; und
R¹, R², n, m und z wie in Anspruch 1 definiert sind.

6. Bismaleinimidverbindung nach Anspruch 5, wobei:
A¹, B¹ und Z¹ unabhängig und bei jedem Auftreten unabhängig voneinander ein substituierter oder unsubstituierter aliphatischer Molekülteil mit 2 bis 80 Kohlenstoffatomen, ein substituierter oder unsubstituierter aromatischer Kohlenwasserstoff-Molekülteil mit 6 bis 80 Kohlenstoffatomen, ein substituierter oder unsubstituierter heteroaromatischer Molekülteil mit 4 bis 80 Kohlenstoffatomen, ein substituierter oder unsubstituierter Siloxan-Molekülteil mit 2 bis 50 Siliciumatomen oder eine Kombination sind, wobei gegebenenfalls einer oder mehrere von A¹, B¹ und Z¹ ein Cardo-Zentrum oder Spiro-Zentrum enthalten.

7. Bismaleinimidverbindung nach Anspruch 5 oder 6, wobei:
A¹, B¹ und Z¹ unabhängig und bei jedem Auftreten unabhängig voneinander dargestellt werden durch Formel (5):
-G²¹-(A²¹-G²²)ₖ-A²²-(G²³-A²³)ₗ-G²⁴- Formel (5)
wobei:
A²¹, A²² und A²³ unabhängig und bei jedem Auftreten unabhängig voneinander eine zweiwertige aromatische Gruppe, zweiwertige aliphatische Gruppe oder zweiwertige gemischt aromatisch-aliphatische Gruppe sind, die ein oder mehrere aus N, O und S ausgewählte Heteroatome enthalten kann und die mit einem oder mehreren Substituenten substituiert sein kann, die ausgewählt sind aus der Liste bestehend aus Halogen, Alkyl mit 1 bis 10 Kohlenstoffatomen, Alkoxy mit 1 bis 10 Kohlenstoffatomen, Aryl mit 6 bis 10 Kohlenstoffatomen und Aryloxy mit 6 bis 10 Kohlenstoffatomen, wobei einer oder mehrere von A²¹, A²² und A²³ gegebenenfalls ein Cardo-Zentrum oder Spiro-Zentrum enthalten;
G²¹, G²², G²³ und G²⁴ unabhängig und bei jedem Auftreten unabhängig voneinander -O-, -S-, -CO-, -(CO)-O-, -O-(CO)-, -S-(CO)-, -(CO)-S-, -O-(CO)-O-, -(CO)-NR⁰¹-, -NR⁰¹-(CO)-, -NR⁰¹-(CO)-NR⁰²-, -NR⁰¹-(CO)-O-, -O-(CO)-NR⁰¹-, -OCH₂-, -CH₂O-, -SCH₂-, -CH₂S-, -CF₂O-, -OCF₂-, -CF₂S-, -SCF₂-, -CH₂CH₂-, -(CH₂)₄-, -CF₂CH₂-, -CH₂CF₂-, -CF₂CF₂-, -CH=N-, -N=CH-, -N=N-, -CH=CR⁰¹-, -CY⁰¹=CY⁰²-, -C≡C-, -CH=CH-(CO)-O-, -O-(CO)-CH=CH- oder eine Einfachbindung sind, wobei R⁰¹ und R⁰² unabhängig voneinander H oder Alkyl mit 1 bis 5 Kohlenstoffatomen sind;
Y⁰¹ und Y⁰² unabhängig voneinander H, Alkyl mit 1 bis 5 Kohlenstoffatomen, Phenyl, F, Cl oder CN sind; und
k und l unabhängig voneinander 0, 1, 2, 3 oder 4 sind.

8. Bismaleinimidverbindung nach Anspruch 7, wobei:
A²¹, A²² und A²³ unabhängig und bei jedem Auftreten unabhängig voneinander dargestellt werden durch eine der Formeln (6a) bis (6u): 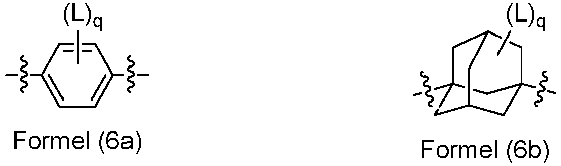 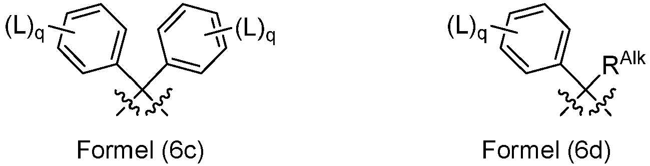 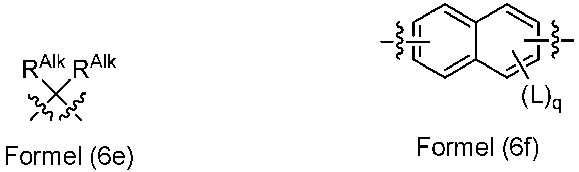 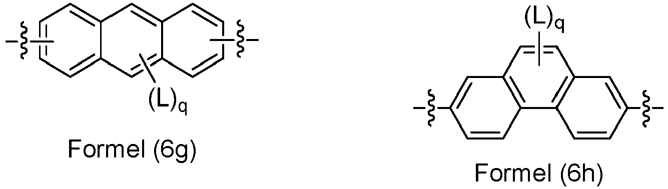 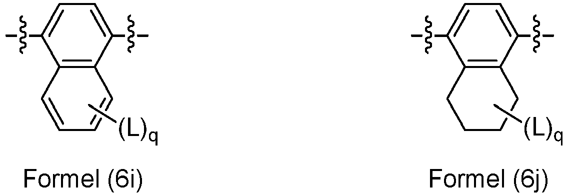 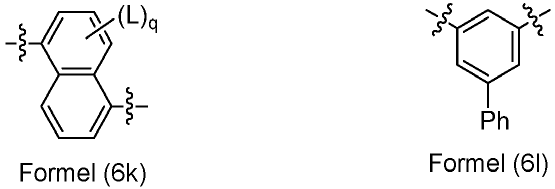 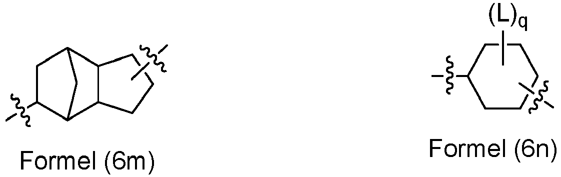 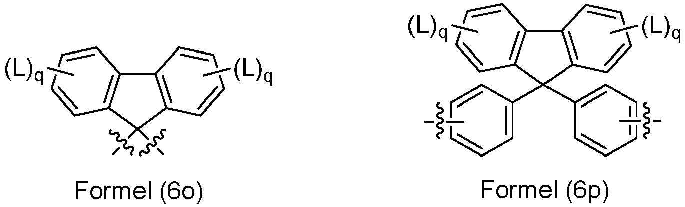 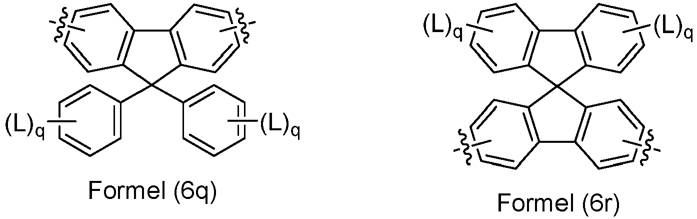 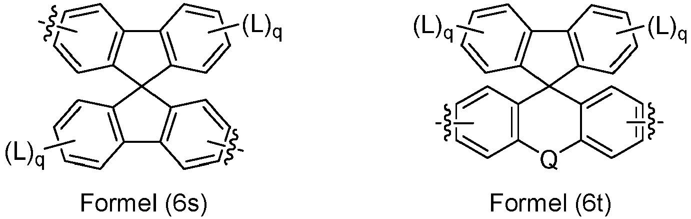 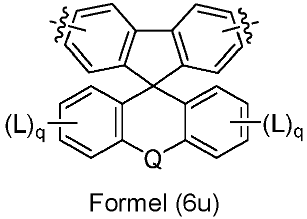 wobei 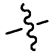 eine Bindungsstelle darstellt;
L Alkyl mit 1 bis 5 Kohlenstoffatomen, Halogenyl, Ph oder CN ist;
R^{Alk} Alkyl mit 1 bis 5 Kohlenstoffatomen ist;
Q O, S oder CH₂ ist, und
q eine ganze Zahl von 0 bis 4 ist.

9. Bismaleinimidverbindung nach einem oder mehreren der Ansprüche 1 bis 8, wobei:
R^{a} und R^{b} unabhängig voneinander ein substituierter oder unsubstituierter aliphatischer Molekülteil mit 2 bis 60 Kohlenstoffatomen sind; und
R^{z} R^{a} oder R^{b} ist.

10. Bismaleinimidverbindung nach einem oder mehreren der Ansprüche 1 bis 9, wobei:
R^{a} und R^{b} unabhängig und bei jedem Auftreten unabhängig voneinander dargestellt werden durch Formel (7a) oder (7b): 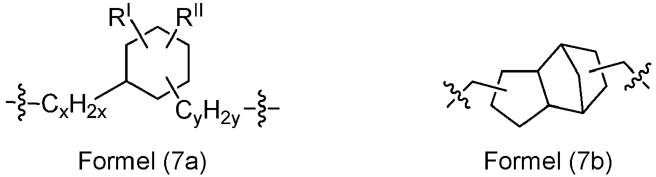
wobei 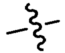 eine Bindungsstelle darstellt;
x und y unabhängig voneinander eine ganze Zahl von 0 bis 10 sind;
R^{I} und R^{II} unabhängig voneinander eine lineare Alkylgruppe mit 1 bis 10 Kohlenstoffatomen oder eine verzweigte Alkylgruppe mit 3 bis 10 Kohlenstoffatomen sind.

11. Bismaleinimidverbindung nach einem oder mehreren der Ansprüche 1 bis 10, wobei:
R^{a} und R^{b} unabhängig und bei jedem Auftreten unabhängig voneinander dargestellt werden durch Formel (8a) oder (8b): 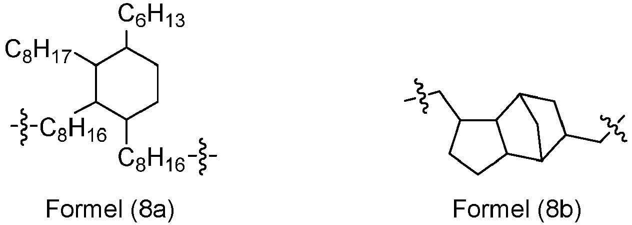 wobei 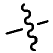 eine Bindungsstelle darstellt.

12. Bismaleinimidverbindung nach einem oder mehreren der Ansprüche 1 bis 11, wobei:
X ein substituierter oder unsubstituierter aliphatischer Molekülteil mit 1 bis 30 Kohlenstoffatomen ist.

13. Verfahren zum Bilden eines dielektrischen Polymermaterials, umfassend die folgenden Schritte:
(i) Bereitstellen einer Formulierung enthaltend eine oder mehrere Bismaleinimidverbindungen nach einem oder mehreren der Ansprüche 1 bis 12; und
(ii) Härten der Formulierung.

14. Verfahren zum Bilden eines dielektrischen Polymermaterials nach Anspruch 13, wobei die Formulierung ferner eine oder mehrere zusätzliche Verbindungen enthält, die in der Lage sind, mit der Bismaleinimidverbindung zu reagieren.

15. Verfahren zum Bilden eines dielektrischen Polymermaterials nach Anspruch 13 oder 14, wobei die Formulierung einen oder mehrere anorganische oder organische Füllstoffe enthält.

16. Dielektrisches Polymermaterial, erhältlich durch das Verfahren nach irgendeinem der Ansprüche 13 bis 15.

17. Dielektrisches Polymermaterial enthaltend mindestens eine Wiederholungseinheit, die von der Bismaleinimidverbindung wie in irgendeinem der Ansprüche 1 bis 12 definiert abgeleitet ist.

18. Dielektrisches Polymermaterial nach Anspruch 17, wobei die Wiederholungseinheit eine Struktureinheit enthält, die dargestellt wird durch Formel (9) oder (10): 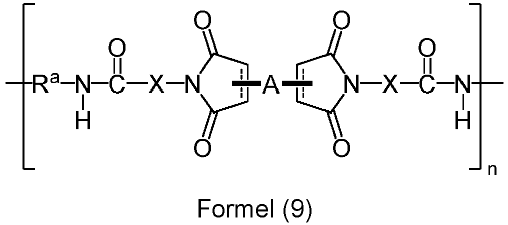 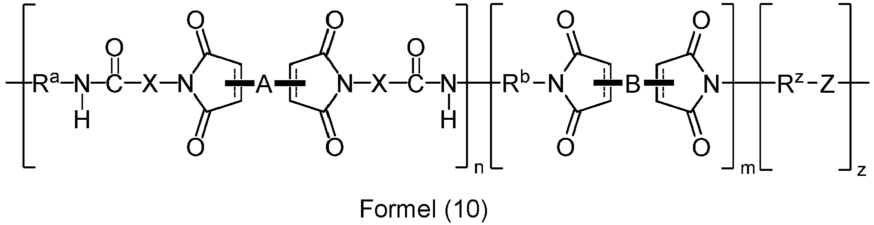 wobei 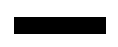 , 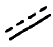 , A, B, Z, R^{a}, R^{b}, R^{z}, X, n, m und z wie in irgendeinem der Ansprüche 1 bis 12 definiert sind.

19. Elektronische Vorrichtung enthaltend ein dielektrisches Polymermaterial nach irgendeinem der Ansprüche 16 bis 18.

20. Elektronische Vorrichtung nach Anspruch 19, wobei es sich bei der elektronischen Vorrichtung um eine mikroelektronische Vorrichtung handelt und das dielektrische Polymermaterial als Repassivierungsmaterial in einer Umverteilungsschicht der mikroelektronischen Vorrichtung enthalten ist.

## Revendications

1. Composé de bismaléimide, représenté par la Formule (1) ou (2) : 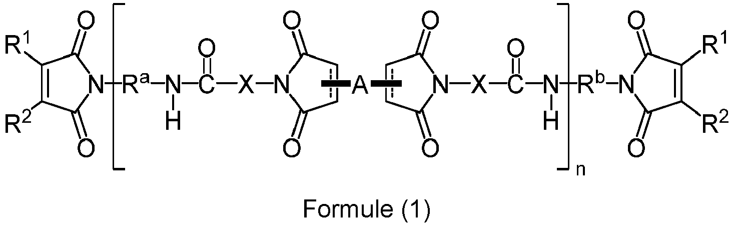 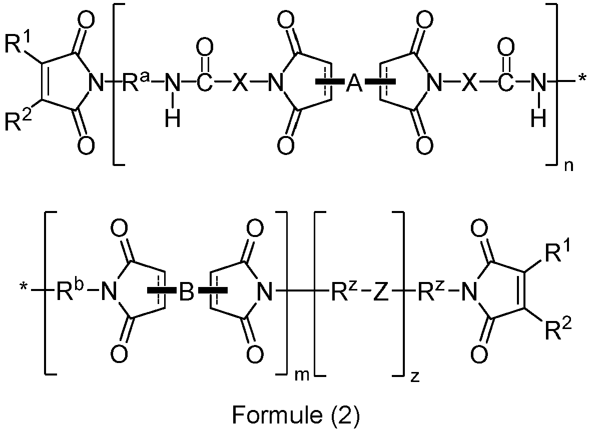 dans laquelle :
A, B et Z sont indépendamment et à chaque occurrence indépendamment les uns des autres, un motif de liaison comprenant un ou plusieurs parmi un motif aliphatique, aromatique, ou siloxane, où éventuellement un ou plusieurs parmi A, B et Z contiennent un centre cardo ou un centre spiro ;
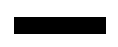 représente une seule liaison simple ou deux liaisons simples ;
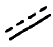 représente une liaison simple ou une double liaison ;
R^{a} et R^{b} sont indépendamment et à chaque occurrence indépendamment l'un de l'autre, un motif de liaison comprenant un ou plusieurs parmi un motif aliphatique, aromatique, ou siloxane ;
R^{z} est R^{a} ou R^{b} ;
X est à chaque occurrence indépendamment les uns des autres un motif de liaison comprenant un ou plusieurs parmi un motif aliphatique, aromatique, ou siloxane ;
R¹ est H ou alkyle ayant de 1 à 5 atomes de carbone ;
R² est H ou alkyle ayant de 1 à 5 atomes de carbone ;
n est un nombre entier allant de 1 à 60 ;
m est un nombre entier allant de 0 à 60 ; et
z est un nombre entier allant de 0 à 60 ;
où au moins l'un parmi m ou z est ≠ 0.

2. Composé de bismaléimide selon la revendication 1, dans lequel :
A, B et Z sont indépendamment et à chaque occurrence indépendamment les uns des autres, un motif aliphatique substitué ou non substitué ayant de 2 à 100 atomes de carbone, un motif hydrocarboné aromatique substitué ou non substitué ayant de 6 à 100 atomes de carbone, un motif hétéroaromatique substitué ou non substitué ayant de 4 à 100 atomes de carbone, un motif siloxane substitué ou non substitué ayant de 2 à 50 atomes de silicium, ou une combinaison de ceux-ci, où éventuellement un ou plusieurs parmi A, B et Z contiennent un centre cardo ou un centre spiro.

3. Composé de bismaléimide selon la revendication 1 ou 2, dans lequel :
R^{a} et R^{b} sont indépendamment et à chaque occurrence indépendamment l'un de l'autre, un motif aliphatique substitué ou non substitué ayant de 2 à 100 atomes de carbone, un motif hydrocarboné aromatique substitué ou non substitué ayant de 6 à 100 atomes de carbone, un motif hétéroaromatique substitué ou non substitué ayant de 4 à 100 atomes de carbone, un motif siloxane substitué ou non substitué ayant de 2 à 50 atomes de silicium, ou une combinaison de ceux-ci ; et
R^{z} est R^{a} ou R^{b}.

4. Composé de bismaléimide selon l'une ou plusieurs parmi les revendications 1 à 3, dans lequel : X est à chaque occurrence indépendamment les uns des autres un motif aliphatique substitué ou non substitué ayant de 2 à 100 atomes de carbone, un motif hydrocarboné aromatique substitué ou non substitué ayant de 6 à 100 atomes de carbone, un motif hétéroaromatique substitué ou non substitué ayant de 4 à 100 atomes de carbone, un motif siloxane substitué ou non substitué ayant de 2 à 50 atomes de silicium, ou une combinaison de ceux-ci.

5. Composé de bismaléimide selon la revendication 1, le composé de bismaléimide selon la Formule (1) étant représenté par la Formule (3a) ou (3b) et le composé de bismaléimide selon la Formule (2) étant représenté par la Formule (4a) ou (4b) : 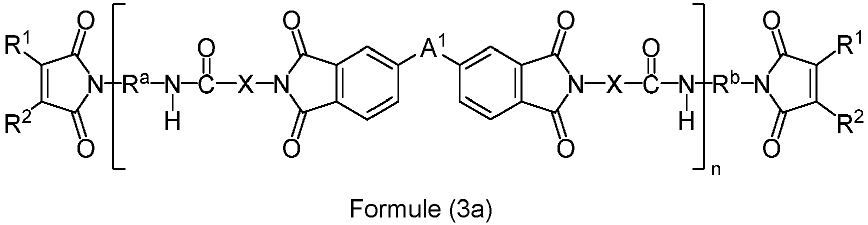 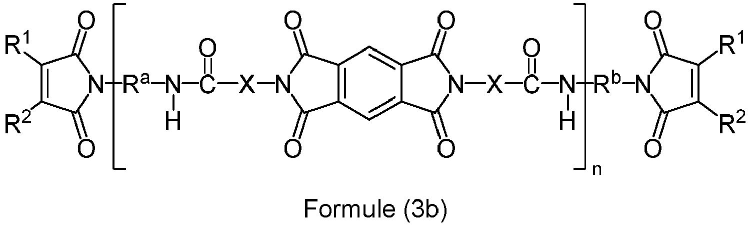 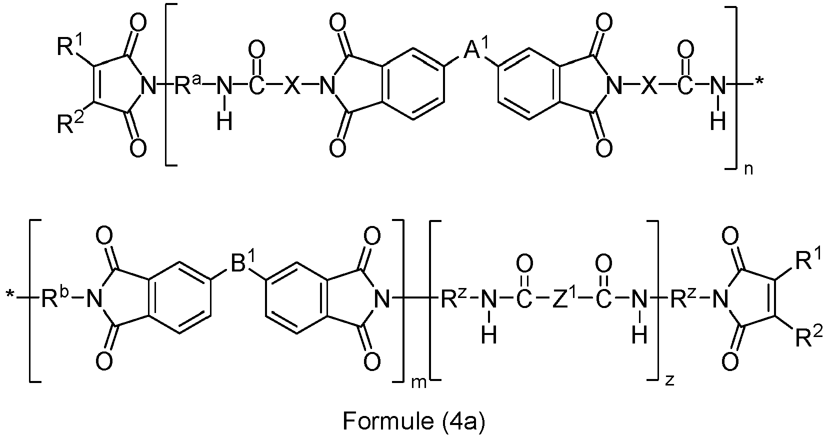 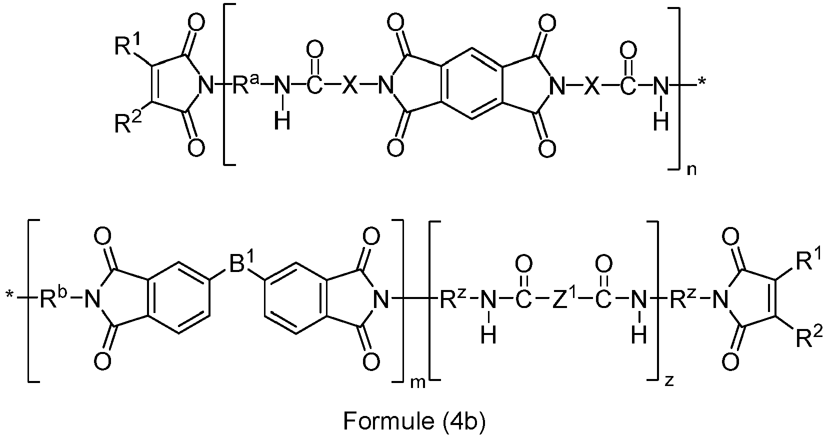 dans laquelle :
A¹, B¹ et Z¹ sont indépendamment et à chaque occurrence indépendamment les uns des autres, un motif de liaison comprenant un ou plusieurs parmi un motif aliphatique, aromatique, ou siloxane, où éventuellement un ou plusieurs parmi A¹, B¹ et Z¹ contiennent un centre cardo ou un centre spiro ;
R^{a} et R^{b} sont indépendamment et à chaque occurrence indépendamment l'un de l'autre, un motif aliphatique substitué ou non substitué ayant de 2 à 100 atomes de carbone, un motif hydrocarboné aromatique substitué ou non substitué ayant de 6 à 100 atomes de carbone, un motif hétéroaromatique substitué ou non substitué ayant de 4 à 100 atomes de carbone, un motif siloxane substitué ou non substitué ayant de 2 à 50 atomes de silicium, ou une combinaison de ceux-ci ;
R^{z} est R^{a} ou R^{b} ;
X est à chaque occurrence indépendamment les uns des autres un motif aliphatique substitué ou non substitué ayant de 2 à 100 atomes de carbone, un motif hydrocarboné aromatique substitué ou non substitué ayant de 6 à 100 atomes de carbone, un motif hétéroaromatique substitué ou non substitué ayant de 4 à 100 atomes de carbone, un motif siloxane substitué ou non substitué ayant de 2 à 50 atomes de silicium, ou une combinaison de ceux-ci ; et
R¹, R², n, m et z sont tels que définis selon la revendication 1.

6. Composé de bismaléimide selon la revendication 5, dans lequel :
A¹, B¹ et Z¹ sont indépendamment et à chaque occurrence indépendamment les uns des autres, un motif aliphatique substitué ou non substitué ayant de 2 à 80 atomes de carbone, un motif hydrocarboné aromatique substitué ou non substitué ayant de 6 à 80 atomes de carbone, un motif hétéroaromatique substitué ou non substitué ayant de 4 à 80 atomes de carbone, un motif siloxane substitué ou non substitué ayant de 2 à 50 atomes de silicium, ou une combinaison de ceux-ci, où éventuellement un ou plusieurs parmi A¹, B¹ et Z¹ contiennent un centre cardo ou un centre spiro.

7. Composé de bismaléimide selon la revendication 5 ou 6, dans lequel :
A¹, B¹ et Z¹ sont indépendamment et à chaque occurrence indépendamment les uns des autres, représentés par la Formule (5) :
-G²¹-(A²¹-G²²)ₖ-A²²-(G²³-A²³)ₗ-G²⁴- Formule (5)
dans laquelle :
A²¹, A²² et A²³ sont indépendamment et à chaque occurrence indépendamment les uns des autres, un groupement aromatique divalent, un groupement aliphatique divalent ou un groupement mixte aliphatique aromatique divalent, qui peut contenir un ou plusieurs hétéroatomes choisis parmi N, O et S et qui peut être substitué par un ou plusieurs substituants choisis dans la liste constituée par halogène, alkyle ayant de 1 à 10 atomes de carbone, alcoxy ayant de 1 à 10 atomes de carbone, aryle ayant de 6 à 10 atomes de carbone et aryloxy ayant de 6 à 10 atomes de carbone, où un ou plusieurs parmi A²¹, A²² et A²³ contiennent éventuellement un centre cardo ou un centre spiro ;
G²¹, G²², G²³ et G²⁴ sont indépendamment et à chaque occurrence indépendamment les uns des autres, -O-, -S-, -CO-, -(CO)-O-, -O-(CO)-, -S-(CO)-, -(CO)-S-, -O-(CO)-O-, -(CO)-NR⁰¹-, -NR⁰¹-(CO)-, -NR⁰¹-(CO)-NR⁰²-, -NR⁰¹-(CO)-O-, -O-(CO)-NR⁰¹-, -OCH₂-, -CH₂O-, -SCH₂-, -CH₂S-, -CF₂O-, -OCF₂-, -CF₂S-, -SCF₂-, -CH₂CH₂-, -(CH₂)₄-, -CF₂CH₂-, -CH₂CF₂-, -CF₂CF₂-, -CH=N-, -N=CH-, -N=N-, -CH=CR⁰¹-, -CY⁰¹=CY⁰²-, -C≡C-, -CH=CH-(CO)-O-, -O-(CO)-CH=CH-, ou une liaison simple, où R⁰¹ et R⁰² sont indépendamment l'un de l'autre H ou alkyle ayant de 1 à 5 atomes de carbone ;
Y⁰¹ et Y⁰² sont indépendamment l'un de l'autre H, alkyle ayant de 1 à 5 atomes de carbone, phényle, F, Cl, ou CN ; et
k et l valent indépendamment l'un de l'autre 0, 1, 2, 3 ou 4.

8. Composé de bismaléimide selon la revendication 7, dans lequel :
A²¹, A²² et A²³ sont indépendamment et à chaque occurrence indépendamment les uns des autres, représentés par l'une des Formules (6a) à (6u) : 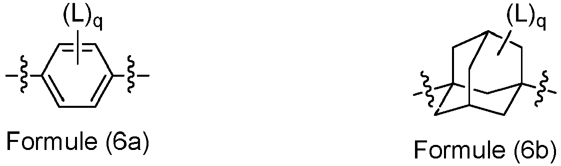 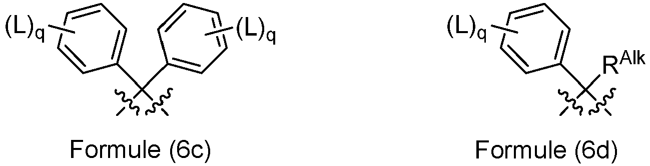 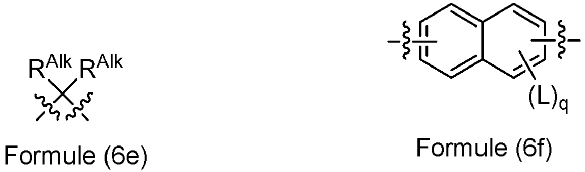 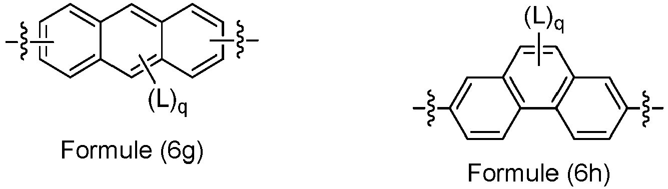 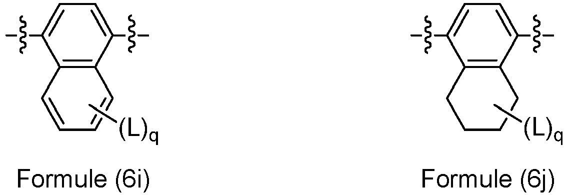 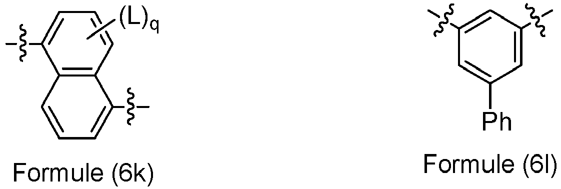 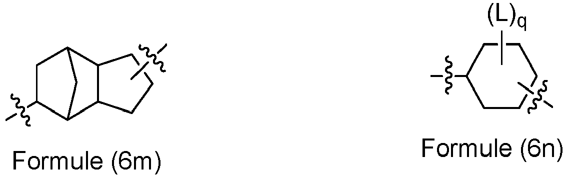 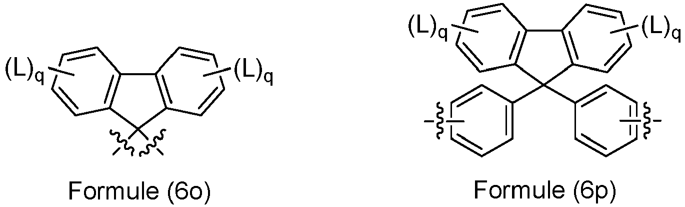 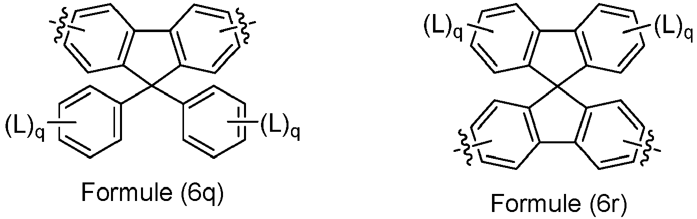 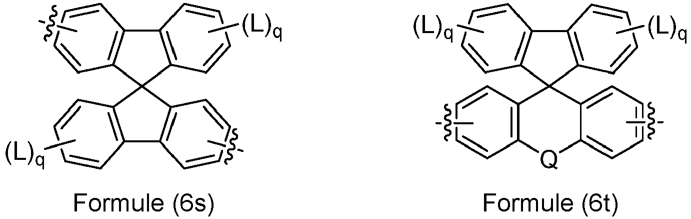 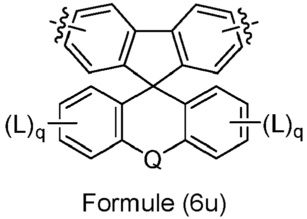
dans lesquelles 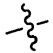 représente un site de liaison ;
L est alkyle ayant de 1 à 5 atomes de carbone, halogényle, Ph ou CN ;
R^{Alk} est alkyle ayant de 1 à 5 atomes de carbone ;
Q est O, S ou CH₂ ; et
q est un nombre entier allant de 0 à 4.

9. Composé de bismaléimide selon l'une ou plusieurs parmi les revendications 1 à 8, dans lequel :
R^{a} et R^{b} sont indépendamment l'un de l'autre un motif aliphatique substitué ou non substitué ayant de 2 à 60 atomes de carbone ; et
R^{z} est R^{a} ou R^{b}.

10. Composé de bismaléimide selon l'une ou plusieurs parmi les revendications 1 à 9, dans lequel :
R^{a} et R^{b} sont indépendamment et à chaque occurrence indépendamment l'un de l'autre, représentés par la Formule (7a) ou (7b) : 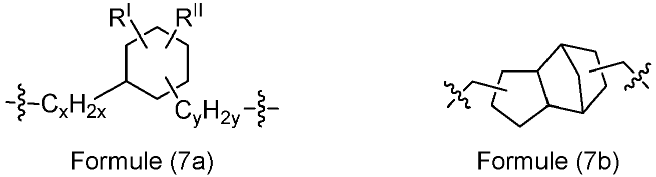
dans laquelle 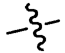 représente un site de liaison ;
x et y sont indépendamment l'un de l'autre un nombre entier allant de 0 à 10 ;
R^{I} et R^{II} sont indépendamment l'un de l'autre un groupement alkyle linéaire ayant de 1 à 10 atomes de carbone, ou un groupement alkyle ramifié ayant de 3 à 10 atomes de carbone.

11. Composé de bismaléimide selon l'une ou plusieurs parmi les revendications 1 à 10, dans lequel :
R^{a} et R^{b} sont indépendamment et à chaque occurrence indépendamment l'un de l'autre, représentés par la Formule (8a) ou (8b) : 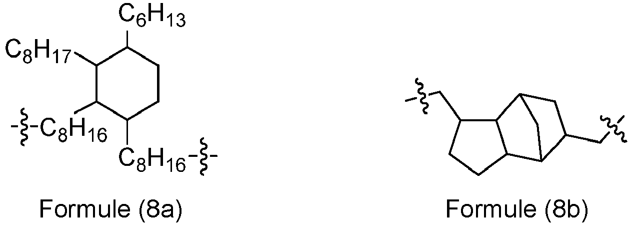 dans laquelle 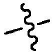 représente un site de liaison.

12. Composé de bismaléimide selon l'une ou plusieurs parmi les revendications 1 à 11, dans lequel :
X est un motif aliphatique substitué ou non substitué ayant de 1 à 30 atomes de carbone.

13. Méthode de formation d'un matériau polymère diélectrique, comprenant les étapes suivantes :
(i) la mise à disposition d'une formulation comprenant un ou plusieurs composés de bismaléimide selon l'une ou plusieurs parmi les revendications 1 à 12 ; et
(ii) le durcissement de ladite formulation.

14. Méthode de formation d'un matériau polymère diélectrique selon la revendication 13, dans laquelle la formulation comprend en outre un ou plusieurs composés supplémentaires capables de réagir avec le composé de bismaléimide.

15. Méthode de formation d'un matériau polymère diélectrique selon la revendication 13 ou 14, dans laquelle la formulation comprend une ou plusieurs charges inorganiques ou organiques.

16. Matériau polymère diélectrique, pouvant être obtenu par la méthode selon l'une quelconque des revendications 13 à 15.

17. Matériau polymère diélectrique comprenant au moins un motif répétitif, qui est dérivé du composé de bismaléimide tel que défini selon l'une quelconque des revendications 1 à 12.

18. Matériau polymère diélectrique selon la revendication 17, dans lequel le motif répétitif comprend un motif structurel représenté par la Formule (9) ou (10) : 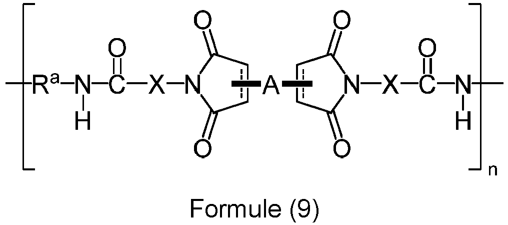 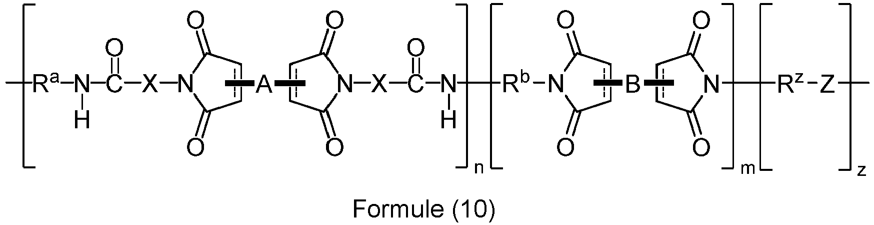 dans laquelle 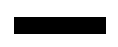 , 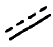 , A, B, Z, R^{a}, R^{b}, R^{z}, X, n, m et z sont tels que définis selon l'une quelconque des revendications 1 à 12.

19. Dispositif électronique comprenant un matériau polymère diélectrique selon l'une quelconque des revendications 16 à 18.

20. Dispositif électronique selon la revendication 19, le dispositif électronique étant un dispositif microélectronique et le matériau polymère diélectrique étant compris comme matériau de repassivation dans une couche de redistribution du dispositif microélectronique.
